# EUROPEAN PATENT APPLICATION

(11) **EP 4 769 698 A1**
(43) Date of publication of application: **01.07.2026**
(21) Application number: 24861485.1
(22) Date of filing: 09.04.2024
(51) Int. Cl.: H01M 50/184, H01M 50/188, H01M 50/586, H01M 50/588, H01M 50/593, H01M 50/559, H01M 10/0525, H01M 10/054

(54) **BATTERY CELL, BATTERY AND ELECTRIC DEVICE**

(30) Priority: 06.09.2023 CN 202311145879
(71) Applicant: Contemporary Amperex Technology Co., Ltd., Ningde, Fujian 352100 (CN)
(72) Inventor: WU, Kai, Fujian 352100 (CN); LI, Meng, Fujian 352100 (CN)
(74) Representative: Lorenz Seidler Gossel Part. mbB
(86) International application number: PCT/CN2024/086707
(87) International publication number: WO 2025/050634

(57) **Abstract**

The present application discloses a battery cell, a battery, and an electrical apparatus. The battery cell of an embodiment of the present application includes a shell, an electrode terminal, an electrode assembly, and an insulating component. The electrode terminal is arranged on the shell. The electrode assembly is accommodated in the shell and includes a tab connected to the electrode terminal. The insulating component connects the electrode terminal and the shell and is used for insulating and separating the electrode terminal from the shell. The insulating component can not only insulate and separate the electrode terminal from the shell, but also connect the shell and the electrode terminal, thereby achieving insulation and fixation between the electrode terminal and the shell at the same time, so as to simplify the structure of the battery cell and improve the energy density of the battery cell.

## Description

### CROSS-REFERENCE TO RELATED APPLICATION

The present application claims the priority to Chinese Patent Application No. 202311145879.4 filed on September 06, 2023 and titled "BATTERY CELL, BATTERY, AND ELECTRICAL APPARATUS", which is incorporated herein by reference in its entirety.

### TECHNICAL FIELD

The present application relates to the field of batteries, and particularly relates to a battery cell, a battery, and an electrical apparatus.

### BACKGROUND

With the development of battery technology, battery cells are used in more and more fields, and have gradually replaced traditional fossil energy in the field of automotive power. Battery cells can store chemical energy and convert it into electrical energy in a controlled manner. In recyclable battery cells, active substances can be activated by charging for reuse after discharge.

How to simply the structure of the battery cell is an important research direction in the industry.

### SUMMARY OF THE INVENTION

The present application provides a battery cell, a battery, and an electrical apparatus that can simply the structure of the battery cell.

In a first aspect, the present application provides a battery cell, which includes a shell, an electrode terminal, an electrode assembly, and an insulating component. The electrode terminal is arranged on the shell. The electrode assembly is accommodated in the shell and includes a tab connected to the electrode terminal. The insulating component connects the electrode terminal and the shell and is used for insulating and separating the electrode terminal from the shell.

The insulating component can not only insulate and separate the electrode terminal from the shell, but also connect the shell and the electrode terminal, thereby achieving insulation and fixation between the electrode terminal and the shell at the same time, so as to simplify the structure of the battery cell and improve the energy density of the battery cell.

In some embodiments, at least a part of the insulating component is located between and attached to the electrode terminal and the shell.

The part of the insulating component located between the shell and the electrode terminal can not only insulate and separate the electrode terminal from the shell, but also be attached to the shell and the electrode terminal at the same time to install the electrode terminal on the shell in an insulated state, thereby simplifying the installation process and molding process of the electrode terminal. The insulating component is directly connected to the electrode terminal and the shell. When the battery cell is subjected to an external impact, the friction between the insulating component and the electrode terminal and the friction between the shell and the electrode terminal can be reduced, thereby reducing the risk of damage and failure of the insulating component and improving the reliability.

In some embodiments, the insulating component is adhered to the shell and the electrode terminal. The adhesion process is simple, and can easily achieve the connection between the insulating component and the shell and the connection between the insulating component and the electrode terminal, and reduce the risk of damage to the insulating component during assembly and use.

In some embodiments, the insulating component is adhered to the shell and the electrode terminal through a hot-press bonding process.

The hot-press bonding process is simple and can easily achieve the connection between the insulating component and the shell and the connection between the insulating component and the electrode terminal, and can improve the bonding strength of the bonding interface between the insulating component and the shell and the bonding strength of the bonding interface between the insulating component and the electrode terminal at the same time, thereby reducing the risk of separation of the insulating component from the shell and the risk of separation of the insulating component from the electrode terminal when the electrode terminal is subjected to force, and improving the reliability of the battery cell.

In some embodiments, a passivation film is provided on the surface of the electrode terminal, and the passivation film is connected to the insulating component. By providing the passivation film, the connection strength between the electrode terminal and the insulating component can be increased, and the corrosion resistance of the electrode terminal can be improved.

In some embodiments, a passivation film is provided on the surface of the shell, and the passivation film is connected to the insulating component. By providing the passivation film, the connection strength between the shell and the insulating component can be increased, and the corrosion resistance of the shell can be improved.

In some embodiments, the shell includes a wall portion, the wall portion is provided with an electrode lead-out hole, and the electrode terminal is arranged on the wall portion and covers at least a part of the electrode lead-out hole in a thickness direction of the wall portion. The insulating component connects the electrode terminal and the wall portion and insulates and separates the electrode terminal from the wall portion.

In some embodiments, the insulating component is used for sealing the electrode lead-out hole. The insulating component can provide insulation, sealing, and connection of the electrode terminal and the shell at the same time, thereby simplifying the structure of the battery cell and improving the energy density of the battery cell.

In some embodiments, the electrode terminal includes a connecting portion, the connecting portion is located on one side of the wall portion along the thickness direction, and a projection of the connecting portion along the thickness direction is located within a projection of the wall portion along the thickness direction. At least a part of the insulating component is located between and attached to the wall portion and the connecting portion.

The wall portion and the connecting portion are arranged along the thickness direction. During assembly, the wall portion and the connecting portion can apply pressure to the insulating component from both sides, thereby improving the bonding strength between the wall portion and the insulating component and the bonding strength between the connecting portion and the insulating component, reducing the risk of separation of the wall portion from the insulating component and the risk of separation of the wall portion from the electrode terminal, and improving the reliability of the battery cell.

In some embodiments, the projection of the part of the insulating component located between the wall portion and the connecting portion along the thickness direction has an area greater than or equal to 50 mm², to increase the connection area between the insulating component and the wall portion and the connection area between the insulating component and the connecting portion, thereby improving the stability of the connection among the insulating component, the wall portion, and the connecting portion.

In some embodiments, the projection of the part of the insulating component located between the wall portion and the connecting portion along the thickness direction has an area greater than or equal to 100 mm², to further increase the connection area between the insulating component and the wall portion and the connection area between the insulating component and the connecting portion, thereby improving the stability of the connection among the insulating component, the wall portion, and the connecting portion.

In some embodiments, the part of the insulating component located between the wall portion and the connecting portion has a thickness ranging from 20 µm to 2000 µm.

The thickness of the part of the insulating component located between the wall portion and the connecting portion is greater than or equal to 20 µm, so as to increase the creepage distance between the wall portion and the connecting portion, reduce the risk of cracking of the insulating component when the battery cell is subjected to an external impact, improve the insulation effect between the wall portion and the connecting portion, and reduce the risk of insulation failure. The thickness of the part of the insulating component located between the wall portion and the connecting portion is less than or equal to 2000 µm, so as to reduce the space and weight occupied by the insulating component and reduce the loss of energy density of the battery cell.

In some embodiments, the thickness of the part of the insulating component located between the wall portion and the connecting portion ranges from 50 µm to 1000 µm, so as to further balance the insulation effect of the insulating component and the space occupied by the insulating component.

In some embodiments, the wall portion includes a first surface and a second surface arranged opposite to each other along the thickness direction of the wall portion, the first surface facing the connecting portion and the second surface facing away from the connecting portion. The insulating component includes a first insulating portion attached to the first surface, at least a part of the first insulating portion being located between the first surface and the connecting portion and covering a region of the first surface overlapping with the connecting portion in the thickness direction.

In some embodiments, in the radial direction of the electrode lead-out hole, the first insulating portion extends beyond the connecting portion, thereby increasing the creepage distance between the connecting portion and the first surface and improving the insulation effect.

In some embodiments, the first insulating portion and the connecting portion are both arranged around the electrode lead-out hole. The contact surface between the first insulating portion and the connecting portion is annular, and the contact surface between the first insulating portion and the wall portion is annular. When the battery cell is subjected to an external impact, the annular contact surfaces can effectively disperse the stress, thereby reducing the risk of failure of the connection between the first insulating portion and the connecting portion and the risk of failure of the connection between the first insulating portion and the wall portion, thereby improving the reliability of the battery cell. The first insulating portion surrounds the electrode lead-out hole, thereby sealing the electrode lead-out hole.

In some embodiments, the connecting portion is located on the side of the wall portion facing the electrode assembly. During the normal operation of the battery cell, the wall portion can block the connecting portion to reduce the risk that the electrode terminal falls off from the electrode lead-out hole.

In some embodiments, the wall portion and the connecting portion are both annular. The ratio of the outer diameter D1 of the connecting portion to the outer diameter D2 of the wall portion ranges from 0.3 to 0.8.

The connection strength among the connecting portion, the wall portion, and the first insulating portion is related to D1/D2. In the embodiment of the present application, D1/D2 is limited to be greater than or equal to 0.3 to increase the effective connection area between the connecting portion and the first insulating portion and the effective connection area between the wall portion and the first insulating portion, improve the bonding strength between the electrode terminal and the insulating component and the bonding strength between the wall portion and the insulating component, reduce the risk of connection failure, improve the reliability of the battery cell, and extend the service life of the battery cell. The greater D1/D2 is, the more space and weight the connecting portion occupies. In the embodiment of the present application, D1/D2 is limited to be less than or equal to 0.8 to reduce the loss of energy density and balance the energy density and reliability of the battery cell.

In some embodiments, the ratio of the outer diameter D1 of the connecting portion to the outer diameter D2 of the wall portion ranges from 0.5 to 0.7.

In some embodiments, the first surface includes a first region and a second region, the first region is covered by the first insulating portion, and the second region surrounds the first region. The battery cell further includes an insulating separator, at least a part of which is located between the second region and the tab in the thickness direction.

The first insulating portion can insulate and separate the first region from the tab, and the insulating separator can separate at least a part of the second region from the tab, thereby reducing the risk of contact between the tab and the wall portion when the battery cell is subjected to an impact and improving the reliability.

In some embodiments, the insulating separator completely separates the second region from the tab in the thickness direction to further reduce the risk of short circuit and improve the reliability of the battery cell..

In some embodiments, the insulating separator overlaps with the first insulating portion in the thickness direction to increase the creepage distance between the tab and the wall portion, reduce the risk of contact between the tab and the wall portion when the battery cell is subjected to an impact, and improve the reliability.

In some embodiments, the insulating separator includes an insulating plate and an insulating cylinder, the insulating cylinder surrounds the tab, and the insulating plate is connected to the end of the insulating cylinder facing the first surface and is located between the first surface and the tab. The insulating plate surrounds the outer side of the connecting portion.

The insulating plate can separate the tab from the second region, and the insulating cylinder can gather the tab from the outer periphery to separate the wall of the shell surrounding the tab from the tab, thereby reducing the risk of short circuit. The insulating plate and the connecting portion may share at least a part of the space in the thickness direction, thereby improving space utilization.

In some embodiments, the battery cell further includes a current collecting member located on the side of the tab facing the first surface and connected to the tab, and the electrode terminal is located on the side of the current collecting member facing away from the tab and connected to the current collecting member. At least a part of the insulating plate is located between the current collecting member and the first surface and is attached to the current collecting member.

In some embodiments, the electrode terminal includes a terminal body and a first limiting portion which are connected to each other, at least a part of the terminal body is accommodated in the electrode lead-out hole, and the first limiting portion protrudes from an outer peripheral surface of the terminal body. The first limiting portion includes the connecting portion. The terminal body extends into the electrode lead-out hole, so that the electrode terminal can be connected to other components. The wall portion blocks the connecting portion, thereby preventing the electrode terminal from falling off out of the shell.

In some embodiments, the insulating component further includes a second insulating portion, which is connected to the first insulating portion, surrounds the terminal body, and insulates and separates the outer peripheral surface of the terminal body from a hole wall of the electrode lead-out hole. The second insulating portion can further insulate and separate the terminal body from the wall portion, thereby reducing the risk of conduction between the terminal body and the shell and improving the reliability.

In some embodiments, the second insulating portion is attached to the outer peripheral surface of the terminal body and the hole wall of the electrode lead-out hole to reduce the risk of foreign matter entering the interior of the shell from between the second insulating portion and the terminal body and the risk of foreign matter entering the electrode lead-out hole from between the second insulating portion and the hole wall of the electrode lead-out hole.

In some embodiments, the electrode terminal further includes a second limiting portion, and the second limiting portion protrudes from the outer peripheral surface of the terminal body and is located on the side of the wall portion facing away from the electrode assembly. In the thickness direction, at least a part of the wall portion is located between the connecting portion and the second limiting portion.

The wall portion can be limited between the first limiting portion and the second limiting portion to limit relative movement between the electrode terminal and the wall portion. The second limiting portion is provided to increase the connection strength between the electrode terminal and the wall portion, thereby improving the stability.

In some embodiments, the insulating component further includes a third insulating portion connected to the second insulating portion, the third insulating portion being attached to the second surface and insulating and separating the second limiting portion from the second surface to reduce the risk of short circuit.

In some embodiments, the second limiting portion has an inclined surface facing the second surface. Along the radial direction of the electrode lead-out hole, the spacing between the inclined surface and the second surface in the thickness direction gradually increases. At least a part of the third insulating portion is located between and attached to the inclined surface and the second surface.

By providing the inclined surface, the space between the second limiting portion and the second surface can be increased; during the assembly process, when the insulating component is squeezed by the second limiting portion, the material can flow between the second surface and the inclined surface, thereby reducing the material overflow.

In some embodiments, the electrode terminal is provided with a gap, which extends from the outer peripheral surface of the terminal body and comes close to the connection between the terminal body and the second limiting portion. The gap can disperse stress and reduce stress concentration during the process of folding and forming of the second limiting portion.

In some embodiments, the second limiting portion is formed on the electrode terminal by providing a first recess on the side facing away from the electrode assembly and folding the side wall of the first recess outward. A second recess is provided on the outer side of the side wall of the first recess. The second recess is used for guiding the side wall of the first recess to bend and is configured to be filled after the second limiting portion is formed to form a gap.

By providing the first recess, a side wall with a smaller thickness is formed on the electrode terminal. The electrode terminal is installed on the wall portion by folding the side wall of the first recess. The second recess can not only guide the side wall of the first recess to fold, but also provide space for the flow of material, thereby reducing the accumulation of the material at the folding point, improving the shape of the electrode terminal, and reducing the difficulty of forming the electrode terminal.

In some embodiments, the melting point of the first insulating portion is greater than or equal to 140°C. The first insulating portion has a high melting point to reduce the risk of softening of the first insulating portion during the production and use of the battery cell, thereby reducing the risk of failure in the connection between the first insulating portion and the wall portion and the risk of failure in the connection between the first insulating portion and the connecting portion, and improving the reliability.

In some embodiments, the yield strength of the first insulating portion is greater than or equal to 20 MPa, so as to reduce the risk of the first insulating portion being crushed by force during the production and use of the battery cell and improve the reliability.

In some embodiments, the first insulating portion includes a first insulating layer, a second insulating layer, and a third insulating layer stacked together, the first insulating layer is adhered to the first surface, the second insulating layer is located between the first insulating layer and the third insulating layer, and at least a part of the third insulating layer is adhered to the connecting portion. The first insulating portion adopts a multi-layer composite structure, which can improve the comprehensive performance of the first insulating portion.

In some embodiments, the melting point of the second insulating layer is greater than that of the first insulating layer, and the melting point of the second insulating layer is greater than that of the third insulating layer. The second insulating layer has a high melting point and is not easily softened during the production and use of the battery cell, thereby insulating and separating the wall portion from the connecting portion and reducing the risk of short circuit.

In some embodiments, the difference between the melting point of the second insulating layer and that of the first insulating layer is greater than or equal to 20°C, so as to reduce the risk of softening or melting of the second insulating layer during the production and use of the battery cell.

In some embodiments, the difference between the melting point of the second insulating layer and that of the third insulating layer is greater than or equal to 20°C, so as to reduce the risk of softening or melting of the second insulating layer during the production and use of the battery cell.

In some embodiments, the first insulating portion includes a polymer and a modified polymer, and the modified polymer is formed by modifying the polymer. The first insulating layer and the third insulating layer both include the modified polymer, and the second insulating layer includes the polymer.

By providing the modified polymer, the bonding strength between the first insulating layer and the wall portion and the bonding strength between the third insulating layer and the connecting portion can be improved, thereby reducing the risk of failure in the connection between the first insulating layer and the wall portion and the risk of failure in the connection between the third insulating layer and the connecting portion.

In some embodiments, the second insulating layer does not include the modified polymer, which can reduce the impact of the modification on the properties of the polymer and retain the original properties of the polymer.

In some embodiments, the polymer comprises polypropylene or polyethylene terephthalate.

In some embodiments, the shell includes a shell body and an end cover. The shell body has an opening, and the end cover covers the opening. The shell body includes a wall portion arranged opposite to the end cover.

In a second aspect, the present application provides a battery which includes a plurality of battery cells provided according to any one embodiment in the first aspect.

In a third aspect, the present application provides an electrical apparatus which includes the battery provided according to any one embodiment in the second aspect. The battery is used for providing electric energy.

### BRIEF DESCRIPTION OF DRAWINGS

The features, advantages and technical effects of the exemplary embodiments of the present application will be described with reference to the accompanying drawings.
FIG. 1 is a schematic structural view of a vehicle provided by some embodiments of the present application;
FIG. 2 is a schematic exploded view of a battery provided by some embodiments of the present application;
FIG. 3 is a schematic structural view of a battery module shown in FIG. 2;
FIG. 4 is a schematic structural view of a battery cell provided by some embodiments of the present application;
FIG. 5 is a schematic exploded view of the battery cell shown in FIG. 4;
FIG. 6 is a schematic sectional view of the battery cell shown in FIG. 4;
FIG. 7 is an enlarged schematic view at a circle in FIG. 6;
FIG. 8 is an enlarged schematic view at block A in FIG. 7;
FIG. 9 is an enlarged schematic view at circle B in FIG. 7;
FIG. 10 is a partial schematic sectional view of a battery cell provided by some embodiments of the present application;
FIG. 11 is a partial schematic sectional view of a battery cell provided by some embodiments of the present application;
FIG. 12 is a schematic view of a battery cell in an assembly process provided by some embodiments of the present application;
FIG. 13 is another schematic view of a battery cell in an assembly process provided by some embodiments of the present application;
FIG. 14 is a partial schematic sectional view of a battery cell provided by some embodiments of the present application;
FIG. 15 is an enlarged schematic view at a circle in FIG. 14;
FIG. 16 is a schematic sectional view of a battery cell provided by some other embodiments of the present application;
FIG. 17 is an enlarged schematic view at a circle in FIG. 16;
FIG. 18 is a schematic structural view of a battery cell provided by some other embodiments of the present application;
   and
FIG. 19 is a schematic sectional view of a battery cell provided by some other embodiments of the present application.

### Reference numerals are as follows:

1. Vehicle; 2. Battery; 3. Controller; 4. Motor; 5. Box; 5a. First box body part; 5b. Second box body part; 5c. Accommodating space; 6. Battery module; 7. Battery cell;
10. Electrode assembly; 11. Tab; 12. Main body portion;
20. Shell; 21. Shell body; 211. Side wall; 212. End wall; 22. End cover; 23. Wall portion; 231. Electrode lead-out hole; 232. First surface; 232a. First region; 232b. Second region; 233. Second surface;
30. Electrode terminal; 31. Terminal body; 31a. Outer peripheral surface; 311. Terminal recess; 311a. Bottom wall; 312. Through hole; 32. First limiting portion; 321. Connecting portion; 322. Transitional portion; 33. Second limiting portion; 331. Inclined surface; 34. Gap; 35. First recess; 351. Side wall of first recess; 36. Second recess;
40. Insulating component; 41. First insulating portion; 411. First insulating layer; 412. Second insulating layer; 413. Third insulating layer; 42. Second insulating portion; 43. Third insulating portion; 431. Fourth insulating layer; 432. Fifth insulating layer; 433. Sixth insulating layer;
50. Insulating separator; 51. Insulating plate; 52. Insulating cylinder;
60. Current collecting member; 70. Sealing plate; 80. Sealing rivet;
Z. Thickness direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, the battery cell may be a secondary battery. The secondary battery refers to a battery cell that, after being discharged, can activate an active material by charging for continued use.

The battery cell may include, but is not limited to, a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, etc.

As an example, the battery cell may be a cylindrical battery cell, a prismatic battery cell, a pouch battery cell, or a battery cell in another shape. The prismatic battery cell includes a square-shell battery cell, a blade-shaped battery cell, and a multi-prism battery. For example, the multi-prism battery may be a hexagonal prism battery, etc., which is not particularly limited in the present application.

A battery mentioned in the embodiments of the present application is a single physical module including one or a plurality of battery cells to provide a higher voltage and capacity.

In some embodiments, the battery may be a battery module. When there are a plurality of battery cells, the plurality of battery cells are arranged and fixed to form a battery module.

In some examples, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus comprises an energy storage container, an energy storage cabinet, etc.

The battery cell generally comprises an electrode assembly and a shell in which the electrode assembly is accommodated. The electrode assembly comprises a positive electrode, a negative electrode, and a separator. During the charging and discharging of the battery cell, active ions (such as lithium ions) are intercalated and deintercalated back and forth between the positive electrode and the negative electrode. The separator is arranged between the positive electrode and the negative electrode and can reduce the risk of short circuit between the positive electrode and the negative electrode, while allowing active ions to pass through.

The shell is used for packaging components such as the electrode assembly and the electrolyte. The shell may be a steel shell, an aluminum shell, a plastic shell (such as polypropylene), a composite metal shell (such as a copper-aluminum composite shell), an aluminum-plastic film, etc.

The battery cell is usually also provided with an electrode terminal mounted on the shell. The electrode terminal is used for being electrically connected to a tab of the electrode assembly to lead out the electric energy generated by the electrode assembly. In order to reduce the risk of short circuit, it is necessary to insulate and separate the electrode terminal from the shell. The shell is usually provided with an insulating component, and at least a part of the insulating component is located between the electrode terminal and the shell, so as to insulate and separate the electrode terminal from the shell.

In the related art, the connection structure among the electrode terminal, the shell, and the insulating component is relatively complicated, which affects the production efficiency and energy density of the battery cell.

In view of this, an embodiment of the present application provides a technical solution, in which the electrode terminal and the shell are connected through an insulating component to achieve insulation and fixation between the electrode terminal and the shell at the same time, so as to simplify the structure of the battery cell and improve the energy density of the battery cell.

The battery cell described in the embodiments of the present application is suitable for use in a battery and an electrical apparatus using a battery.

The battery cell, the battery, and the electrical apparatus disclosed by the embodiments of the present application can be used in an electrical apparatus in which a battery is used as a power source or various energy storage systems in which a battery is used as an energy storage element. The electrical apparatus can be but not limited to mobile phones, tablet computers, laptops, electric toys, electric tools, battery vehicles, electric vehicles, ships, spacecrafts, etc. The electric toys can include fixed or mobile electric toys, such as a game machine, an electric vehicle toy, an electric ship toy, and an electric airplane toy, and the spacecraft can include an airplane, a rocket, a space shuttle, a spaceship, etc.

The following embodiments, for the sake of convenience, are illustrated by taking a vehicle as an electrical apparatus.

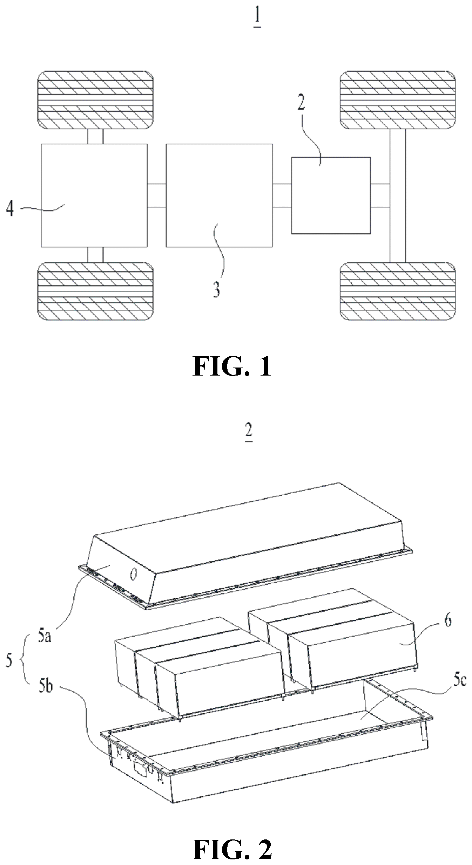

FIG. 1 is a schematic structural view of a vehicle provided in some embodiments of the present application.

As shown in FIG. 1, a battery 2 is provided inside the vehicle 1. The battery 2 may be arranged at the bottom, or head, or tail of the vehicle 1. The battery 2 may be used for supplying power to the vehicle 1. For example, the battery 2 may be used as an operating power source for the vehicle 1.

The vehicle 1 can further comprise a controller 3 and a motor 4. The controller 3 is used for controlling the battery 2 to supply power to the motor 4, for example, for the operating power demand when starting, navigating, and driving the vehicle 1.

In some embodiments of the present application, the battery 2 can be used not only as an operating power source for the vehicle 1, but also as a driving power source for the vehicle 1 to replace or partially replace fuel or natural gas to supply driving power to the vehicle 1.

FIG. 2 is a schematic exploded view of a battery provided by some embodiments of the present application. As shown in FIG. 2, the battery 2 comprises a box 5 and a battery cell (not shown in FIG. 2); and the battery cell is accommodated in the box 5.

The box 5 is used for accommodating the battery cell and the box 5 may have various structures. In some embodiments, the box 5 can comprise a first box body part 5a and a second box body part 5b. The first box body part 5a and the second box body part 5b cover each other. The first box body part 5a and the second box body part 5b jointly define an accommodating space 5c used for accommodating the battery cell. The second box body part 5b can have a hollow structure with one end open. The first box body part 5a has a plate-like structure, and the first box body part 5a covers the open side of the second box body part 5b to form the box 5 with the accommodating space 5c. Each of the first box body part 5a and the second box body part 5b can also have a hollow structure with one side open. The open side of the first box body part 5a covers the open side of the second box body part 5b to form the box 5 with the accommodating space 5c. Of course, the first box body part 5a and the second box body part 5b can be in various shapes, such as cylinders and cuboids.

In order to improve the sealing performance after the first box body part 5a and the second box body part 5b are connected, a sealing member such as a sealant and a sealing ring may also be arranged between the first box body part 5a and the second box body part 5b.

It is assumed that the first box body part 5a covers the top of the second box body part 5b, the first box body part 5a can also be referred to as an upper box cover, and the second box body part 5b can also be referred to as a lower box.

In the battery 2, there can be either one or more battery cells. If there are a plurality of battery cells, the plurality of battery cells can be connected in series, or in parallel, or in parallel-series connection. Parallel-series connection means that the plurality of battery cells are connected in both series and parallel. The plurality of battery cells can be directly connected in series, or in parallel, or in parallel-series connection, and the whole body formed by the plurality of battery cells is then accommodated in the box 5. Of course, the plurality of battery cells can also be connected in series, or in parallel, or in parallel-series connection in advance to form a battery module 6. A plurality of battery modules 6 are connected in series, or in parallel, or in parallel-series connection as a whole and are accommodated in the box 5.

The battery cell may be the minimum unit which forms the battery.

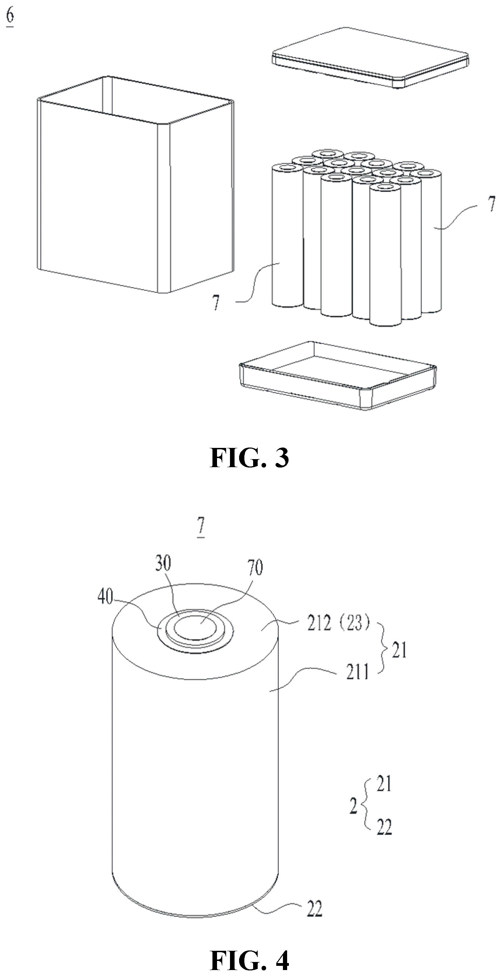

FIG. 3 is a schematic structural view of the battery module shown in FIG. 2.

In some embodiments, as shown in FIG. 3, there are a plurality of battery cells 7, and the plurality of battery cells 7 are connected in series, or in parallel, or in parallel-series connection in advance to form a battery module 6. A plurality of battery modules 6 are then connected in series, or in parallel, or in parallel-series connection as a whole and accommodated in the box.

The plurality of battery cells 7 in the battery module 6 can be electrically connected via a busbar component, so that the parallel, or series, or parallel-series connection of the plurality of battery cells 7 in the battery module 6 is realized. There may be one or more busbar components, and each of the busbar components is used for electrically connecting at least two battery cells.

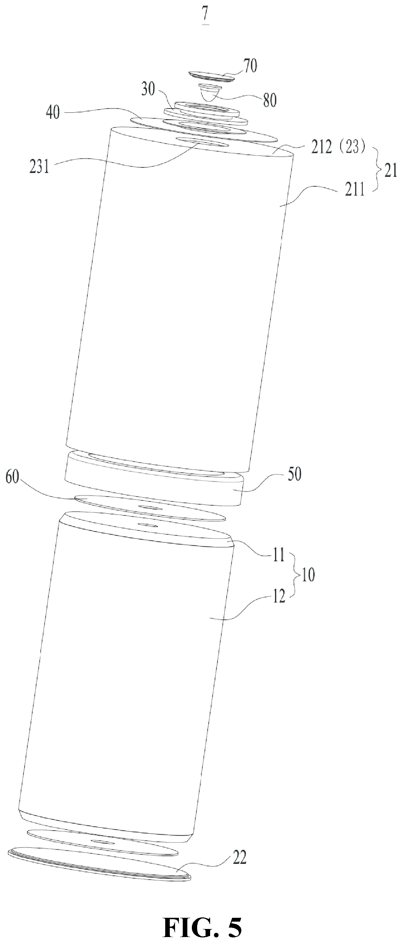

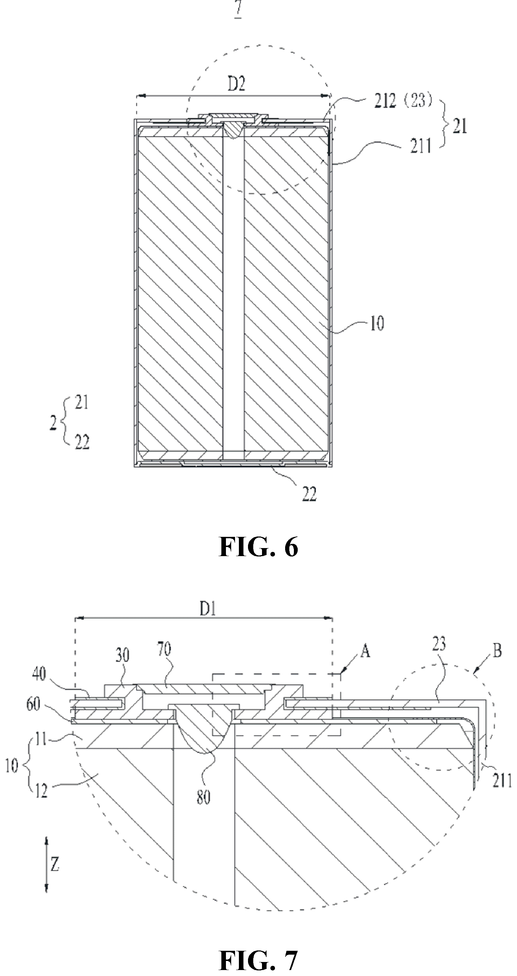

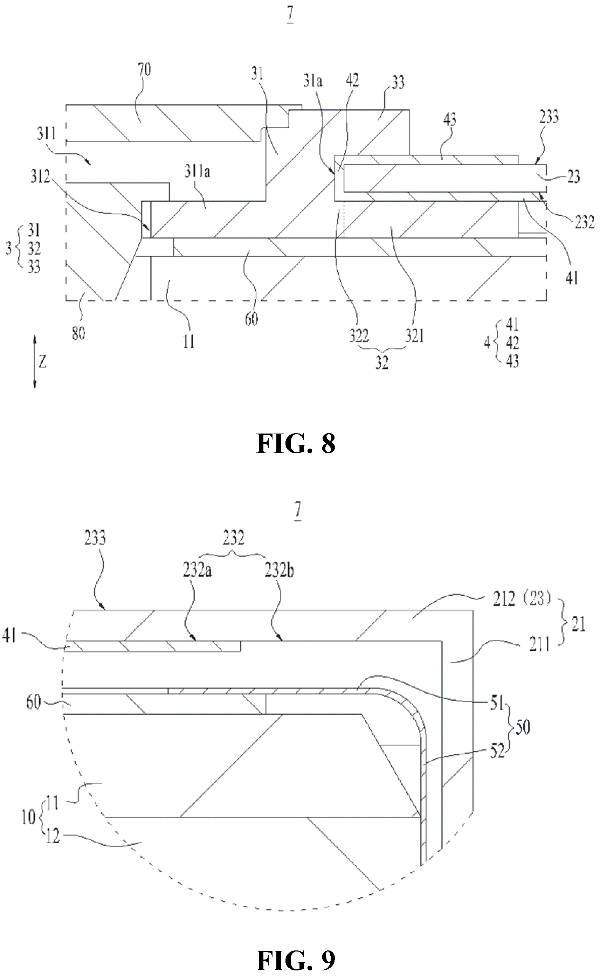

FIG. 4 is a schematic structural view of a battery cell provided by some embodiments of the present application; FIG. 5 is a schematic exploded view of the battery cell shown in FIG. 4; FIG. 6 is a schematic sectional view of the battery cell shown in FIG. 4; FIG. 7 is an enlarged schematic view at a circle of FIG. 6; FIG. 8 is an enlarged schematic view at block A of FIG. 7; and FIG. 9 is an enlarged schematic view at circle B of FIG. 7.

With reference to FIGs. 4 to 9, An embodiment of the present application provides a battery cell 7, which includes an electrode assembly 10 and a shell 20, and the electrode assembly 10 is accommodated in the shell 20.

The electrode assembly 10 includes a positive electrode and a negative electrode. During the charging and discharging of the battery cell 7, active ions (such as lithium ions) are intercalated and deintercalated back and forth between the positive electrode and the negative electrode. Optionally, the electrode assembly 10 further comprises a separator arranged between the positive electrode and the negative electrode. The separator can reduce a risk of short circuit between the positive electrode and the negative electrode, while allowing active ions to pass through.

In some embodiments, the positive electrode can be a positive electrode plate, and the positive electrode plate may comprise a positive electrode current collector and a positive electrode active material layer arranged on at least one surface of the positive electrode current collector.

For example, the positive electrode current collector has two surfaces opposite to each other in a thickness direction of the positive electrode current collector. The positive electrode active material layer is arranged on either or both of the two opposite surfaces of the positive electrode current collector.

As an example, the positive electrode current collector may be a metal foil or a composite current collector. For example, as the metal foil, stainless steel, copper, aluminum, nickel, a carbon electrode, carbon, nickel, titanium, aluminum or stainless steel treated with silver on the surface, etc., may be used. The composite current collector may comprise a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as substrates of polypropylene, polyethylene terephthalate, polybutylene terephthalate, polystyrene, or polyethylene).

As an example, the positive electrode active material layer comprises a positive electrode active material, and the positive electrode active material may include at least one of a lithium-containing phosphate, a lithium transition metal oxide, and respective modified compounds thereof. However, the present application is not limited to these materials, and other traditional materials that may be used for a positive electrode active material layer of a battery may also be used. These positive electrode active material layers may be used either alone or in combination of two or more thereof. The example of the lithium-containing phosphate may include, but is not limited to, at least one of lithium iron phosphate (e.g., LiFePO4 (LFP for short)), a composite material of lithium iron phosphate and carbon, lithium manganese phosphate (e.g., LiMnPO4), a composite material of lithium manganese phosphate and carbon, lithium manganese iron phosphate, and a composite material of lithium manganese iron phosphate and carbon. Examples of lithium transition metal oxides may include, but are not limited to, at least one of lithium cobalt oxides (e.g., LiCoO₂), lithium nickel oxides (e.g., LiNiO₂), lithium-manganese oxides (e.g., LiMnO₂, LiMn2O₄), lithium nickel cobalt oxides, lithium manganese cobalt oxides, lithium nickel manganese oxides (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxides (e.g., LiNi_{0.80}Co_{0.15}Al_{0.05}O₂) and modified compounds thereof.

In some embodiments, the positive electrode may adopt metal foam. The foam metal may be foam nickel, foam copper, foam aluminum, foam alloy, or foam carbon, etc. When a foam metal is used as the positive electrode, the surface of the foam metal may not be provided with a positive electrode active material layer, and certainly, may also be provided with a positive electrode active material layer. As an example, a lithium source material, a potassium metal, or a sodium metal may also be filled or/and deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, a foam metal, or a composite current collector. For example, as the metal foil, aluminum or stainless steel treated with silver on the surface, copper, aluminum, nickel, a carbon electrode, carbon, titanium, etc. can be used. The foam metal may be foam nickel, foam copper, foam aluminum, foam alloy, or foam carbon, etc. The composite current collector may comprise a high molecular material substrate layer and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

As an example, the negative electrode active material may be a negative electrode active material commonly known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector can be aluminum, and the material of the negative electrode current collector can be copper.

In some embodiments, the separator comprises a separator film. The type of the separator film is not particularly limited in the present application, and any well-known separator film having good chemical stability, mechanical stability, and a porous structure can be selected.

As an example, the main material of the separator film can be selected from at least one of glass fibers, non-woven fabric, polyethylene, polypropylene, polyvinylidene fluoride, and ceramic. The separator film can be either a single-layer thin film or a multi-layer composite thin film without special limitations. When the separator film is a multi-layer composite film, the materials of the layers can be the same or different, which is not particularly limited. The separator may be a single component located between the positive and negative electrodes, or may also be attached to the surfaces of the positive and negative electrodes.

In some embodiments, the separator is a solid electrolyte. The solid electrolyte is arranged between the positive electrode and the negative electrode, and functions to transport ions and separate the positive electrode from the negative electrode at the same time.

In some embodiments, the shell 20 includes a shell body 21 and an end cover 22. The shell body 21 has an opening, and the end cover 22 is used for covering the opening.

The shell body 21 is a component used for matching with the end cover 22 to form an internal cavity of the battery cell 7, and the formed internal cavity can be used for accommodating the electrode assembly 10, the electrolyte, and other components.

The shell body 21 and the end cover 22 can be independent components. By way of example, an opening can be formed on the shell body 21, and at the opening, the end cover 22 covers the opening to form the internal cavity of the battery cell 7.

The shell body 21 can be of various shapes and various sizes, such as a cuboid shape, a cylinder shape, and a hexagonal prism shape. Specifically, the shape of the shell body 21 can be determined based on the specific shape and size of the electrode assembly 10. The shell body 21 may also be made of a variety of materials. For example, the material of the shell body 21 includes but is not limited to copper, iron, aluminum, stainless steel, aluminum alloy, etc.

The shape of the end cover 22 can be adapted to the shape of the shell body 21 for matching with the shell body 21. The material of the end cover 22 can be either the same as or different from the material of the shell body 21. Optionally, the end cover 22 can be made of a material with certain hardness and strength (such as copper, iron, aluminum, stainless steel, aluminum alloy, and plastic), and therefore, the end cover 22 is less prone to deformation when being squeezed and collided, the battery cell 7 can have a higher structural strength, and the reliability can also be improved.

The end cover 22 is connected to the shell body 21 by welding, bonding, snap fit, or other means.

Either one or both ends of the shell body 21 can be opened. In some examples, the shell body 21 can have a structure with one side open, and one end cover 22 is provided and covers the shell body 21. In some other examples, the shell body 21 may also have a structure with both sides open, and two end covers 22 are provided and the two end covers 22 respectively cover the two openings of the shell body 21.

In some embodiments, the battery cell 7 includes an electrode terminal 30. The electrode terminal 30 can be used to be electrically connected to the electrode assembly 10 to output or input the electric energy of the battery cell 7.

In some embodiments, the battery cell 7 includes an electrode assembly 10, a shell 20, an electrode terminal 30, and an insulating component 40. The electrode terminal 30 is arranged on the shell 20. The electrode assembly 10 is accommodated in the shell 20, the electrode assembly 10 includes a tab 11, and the tab 11 is electrically connected to the electrode terminal 30. The insulating component 40 connects the electrode terminal 30 and the shell 20 and is used for insulating and separating the electrode terminal 30 from the shell 20.

The electrode assembly 10 is a component in the battery cell 7 where an electrochemical reaction takes place. One or more electrode assemblies 10 may be contained in the shell 20. The electrode assembly 10 may be of a wound structure, a laminated structure, a mixed structure of a wound structure and a laminated structure, or other structures.

The shape of the electrode assembly 10 may be cylindrical, flat, polygonal prism-shaped, or the like.

As an example, the electrode assembly 10 includes a positive electrode plate and a negative electrode plate. The positive electrode plate comprises a positive electrode coating region coated with a positive electrode active material layer and a positive electrode non-coating region not coated with a positive electrode active material layer. The negative electrode plate comprises a negative electrode coating region coated with a negative electrode active material layer and a negative electrode non-coating region not coated with a negative electrode active material layer. The positive electrode non-coated region of the positive electrode plate constitutes a positive tab, and the negative electrode non-coated region of the negative electrode plate constitutes a negative tab.

The tab 11 electrically connected to the electrode terminal 30 can be either a positive tab or a negative tab. In the charging and discharging process of the battery cell 7, the positive electrode active substance layer and the negative electrode active substance layer react with the electrolyte, and the tab 11 is connected to the electrode terminal 30 to form a current loop.

The tab 11 can be directly connected to the electrode terminal 30. For example, the tab is connected to the electrode terminal 30 by welding, abutting, or other means. Alternatively, the tab 11 can be indirectly connected to the electrode terminal 30 via other conductive components (such as a current collecting member), so that the tab 11 can be electrically connected to the electrode terminal 30.

The shell 20 is of a hollow structure, and an inner cavity for accommodating the electrode assembly 10 is formed in the shell 20. The shape of the shell 20 can be determined depending on the specific shape of the electrode assembly 10. For example, if the electrode assembly 10 is of a cuboid structure, a cuboid shell can be selected; and if the electrode assembly 10 is of a cylindrical structure, a cylindrical shell can be selected.

By way of example, the shell 20 includes an end cover 22 and a shell body 21, and the electrode terminal 30 may be arranged on the shell body 21 or on the end cover 22.

The electrode terminal 30 and the shell 20 are insulated and separated from each other, which means that the two are electrically insulated and separated, and charges are substantially unable to move from one to the other. The insulating component 40 can block the transfer of charges between the shell 20 and the electrode terminal 30 to a certain extent, thereby insulating and separating the shell 20 from the electrode terminal 30.

By way of example, the electrode terminal 30 may be an output terminal of the battery cell 7 to be electrically connected to the busbar component of the battery. Optionally, at least a part of the electrode terminal 30 is exposed to facilitate connection with the busbar component.

In an embodiment of the present application, the insulating component 40 can not only insulate and separate the electrode terminal 30 from the shell 20, but also connect the shell 20 and the electrode terminal 30, thereby achieving insulation and fixation between the electrode terminal 30 and the shell 20 at the same time, so as to simplify the structure of the battery cell 7 and improve the energy density of the battery cell 7.

In some embodiments, at least a part of the insulating component 40 is located between and attached to the electrode terminal 30 and the shell 20.

The insulating component 40 may be entirely located between the shell 20 and the electrode terminal 30, or may be only partially located between the shell 20 and the electrode terminal 30.

Attachment may refer to sticking and connecting; when one member is attached to another member, the two members are in a connected state at least partially at their contact surfaces, and the fixed connection between the two members does not need to be achieved by other structures. For example, one member may be attached to another member by adhesion, coating, or other means.

The part of the insulating component 40 located between the shell 20 and the electrode terminal 30 can not only insulate and separate the electrode terminal 30 from the shell 20, but also be attached to the shell 20 and the electrode terminal 30 at the same time to install the electrode terminal 30 on the shell 20 in an insulated state, thereby simplifying the installation process and forming process of the electrode terminal 30. The insulating component 40 is directly connected to the electrode terminal 30 and the shell 20. When the battery cell 7 is subjected to an external impact, the friction between the insulating component 40 and the electrode terminal 30 and the friction between the shell 20 and the electrode terminal 30 can be reduced, thereby reducing the risk of damage and failure of the insulating component 40 and improving the reliability.

In some embodiments, the insulating component 40 is closely bonded with the shell 20 and the insulating component 40 is closely bonded with the electrode terminal 30. The insulating component 40 and the shell 20 form a tightly bonded structure, and the insulating component 40 and the electrode terminal 30 form a tightly bonded structure, thereby achieving insulation and connection between the shell 20 and the electrode terminal 30 and improving the reliability of the battery cell 7.

In some embodiments, the insulating component 40 is adhered to the shell 20 and the electrode terminal 30. The adhesion process is simple, and can easily achieve the connection between the insulating component 40 and the shell 20 and the connection between the insulating component 40 and the electrode terminal 30, and reduce the risk of damage to the insulating component 40 during assembly and use.

By way of example, through adhesion, tight bonding between the insulating component 40 and the shell 20 and tight bonding between the insulating component 40 and the electrode terminal 30 can be achieved.

In some embodiments, the insulating component 40 is adhered to the shell 20 and the electrode terminal 30 through a hot-press bonding process.

The hot-press bonding process is simple and can easily achieve the connection between the insulating component 40 and the shell 20 and the connection between the insulating component 40 and the electrode terminal 30, and can improve the bonding strength of the bonding interface between the insulating component 40 and the shell 20 and the bonding strength of the bonding interface between the insulating component 40 and the electrode terminal 30 at the same time, thereby reducing the risk of separation of the insulating component 40 from the shell 20 and the risk of separation of the insulating component 40 from the electrode terminal 30 when the electrode terminal 30 is subjected to force, and improving the reliability of the battery cell 7.

In some embodiments, the insulating component 40 is tightly bonded with the shell 20 through a microscopic mating structure, and the insulating component 40 is tightly bonded with the electrode terminal 30 through a microscopic mating structure.

The microscopic mating structure enables a simple tight binding operation process. At the same time, it can improve the bonding strength of the bonding interface between the insulating component 40 and the shell 20 and the bonding strength of the bonding interface between the insulating component 40 and the electrode terminal 30, reduce the risk of separation of the insulating component 40 from the shell 20 and the risk of separation of the insulating component 40 from the electrode terminal 30 when the electrode terminal 30 is subjected to force, and improve the reliability of the battery cell 7.

In some embodiments, a passivation film is provided on the surface of the electrode terminal 30, and the passivation film is connected to the insulating component 40.

By providing the passivation film, a porous structure can be formed on the electrode terminal 30, thereby increasing the specific surface area of the electrode terminal 30, enhancing the adsorption of the electrode terminal 30 to the insulating component 40, and improving the mechanical engagement between the electrode terminal 30 and the insulating component 40; at the same time, the formation of hydrogen bonds in the passivation film of the electrode terminal 30 enables the electrode terminal 30 and the insulating component 40 to be tightly bonded, thereby improving the connection strength between the electrode terminal 30 and the insulating component 40.

The passivation film can also improve the corrosion resistance of the electrode terminal 30.

For example, the electrode terminal 30 may be passivated to form the passivation film on the surface of the electrode terminal 30.

In some embodiments, the passivation film of the electrode terminal 30 has a thickness ranging from 0.01 µm to 1 µm.

In some embodiments, the passivation film is provided on the surface of the shell 20, and the passivation film is connected to the insulating component 40.

By providing the passivation film, a porous structure can be formed on the shell 20, thereby increasing the specific surface area of the shell 20, enhancing the adsorption of the shell 20 to the insulating component 40, and improving the mechanical engagement between the shell 20 and the insulating component 40; at the same time, the formation of hydrogen bonds in the passivation film of the shell 20 enables the shell 20 and the insulating component 40 to be tightly bonded, thereby improving the connection strength between the shell 20 and the insulating component 40. The passivation film can also improve the corrosion resistance of the shell 20.

In some embodiments, the passivation film of the shell 20 has a thickness ranging from 0.01 µm to 1 µm.

In some embodiments, the material of the insulating component 40 may include a thermal composite adhesive.

In some embodiments, the materials of the shell 20 and the electrode terminal 30 are both metal.

In some embodiments, the electrode terminal 30, the shell 20, and the thermal composite adhesive are heated and pressurized so that the thermal composite adhesive is bonded with the electrode terminal 30 and the shell 20.

The passivation film contains more polar groups, which can enhance the hydrogen bond between the metal surface and the thermal composite adhesive and improve the interface bonding strength. The purpose of heating and pressurizing is to make the thermal composite adhesive become molten and penetrate into the microporous structure of the metal surface, so as to better react with the polar functional groups on the metal surface to form bonds.

The passivation film contains a large number of polar groups or has a porous structure to improve the adhesion strength between the metal surface and the thermal composite adhesive and the corrosion resistance of the metal material, thereby increasing the service life of the battery cell 7.

The insulating component 40 can achieve insulation and connection between two metal interfaces.

In some embodiments, the shell 20 includes a wall portion 23, the wall portion 23 is provided with an electrode lead-out hole 231, and the electrode terminal 30 is arranged on the wall portion 23 and covers at least a part of the electrode lead-out hole 231 in the thickness direction Z of the wall portion 23. The insulating component 40 connects the electrode terminal 30 and the wall portion 23 and insulates and separates the electrode terminal 30 from the wall portion 23.

As an example, the wall portion 23 can be either an end cover 22 or a wall of the shell body 21.

As an example, the wall portion 23 can be circular, rectangular, elliptical or in other shapes.

By way of example, the electrode lead-out hole 231 penetrates through the wall portion 23, so that the electrode terminal 30 can conveniently lead electric energy of the electrode assembly 10 to the outside of the shell 20. Optionally, the electrode lead-out hole 231 penetrates through the wall portion 23 in the thickness direction Z of the wall portion 23.

The electrode terminal 30 can cover only a part of the electrode lead-out hole 231, or cover the whole electrode lead-out hole 231. As an example, the electrode terminal 30 can independently close the electrode lead-out hole 231 so as to separate the internal space of the shell 20 from the external space and improve the sealing performance of the battery cell 7; and alternatively, the electrode terminal 30 can cooperate with other functional components (such as the insulating component 40) to close the electrode lead-out hole 231 together, so as to separate the internal space of the shell 20 from the external space and improve the sealing performance of the battery cell 7.

In some embodiments, the shell 20 includes a shell body 21 and an end cover 22. The shell body 21 has an opening, and the end cover 22 covers the opening.

Optionally, the shell body 21 includes a side wall 211 and an end wall 212. The side wall 211 surrounds the outer side of the electrode assembly 10, the end wall 212 is arranged opposite to the opening, and the wall portion 23 is the end cover 22 or the end wall 212.

One or more side walls 211 can be provided. In some examples, one side wall 211 can be provided and can be of a cylindrical structure. In some other examples, a plurality of side walls 211 can be provided and are sequentially connected in the circumferential direction of the electrode assembly 10; for example, four side walls 211 are provided and are sequentially connected to form a squared cylinder structure.

In some embodiments, the battery cell 7 is a cylindrical battery cell, and one side wall 211 is provided and is of a cylindrical structure. The end cover 22 or the end wall 212 is flatter than the side wall 211, so the electrode terminal 30 can be arranged on the end cover 22 or the end wall 212 to improve the assembly efficiency of the battery cell 7.

In some embodiments, the shell body 21 includes a wall portion 23 arranged opposite to the end cover 22. By way of example, the wall portion 23 is the end wall 212 of the shell body 21.

In some embodiments, the insulating component 40 is used for sealing the electrode lead-out hole 231.

Sealing the electrode lead-out hole 231 may mean cutting off the communication between the electrode lead-out hole 231 and the internal space of the shell 20, and/or cutting off the communication between the electrode lead-out hole 231 and the external space of the shell 20, thereby separating the internal space of the shell 20 from the external space of the shell 20.

The insulating component 40 can provide insulation, sealing, and connection of the electrode terminal 30 and the shell 20 at the same time, thereby simplifying the structure of the battery cell 7 and improving the energy density of the battery cell 7.

The insulating component 40 is attached to the electrode terminal 30 and the shell 20, which can reduce the risk of foreign matter entering the interior of the shell 20 from between the insulating component 40 and the electrode terminal 30 and the risk of foreign matter entering the interior of the shell 20 from between the insulating component 40 and the shell 20, thereby improving the sealing performance.

In some embodiments, the insulating component 40 connects the electrode terminal 30 and the shell 20, which can reduce the size of the electrode terminal 30 in the thickness direction Z while achieving an insulating and sealing function, thereby improving the energy density of the battery cell 7.

In some embodiments, at least a part of the insulating component 40 is located between the wall portion 23 and the electrode terminal 30 in the thickness direction Z and surrounds the electrode lead-out hole 231.

In some embodiments, the electrode terminal 30 includes a connecting portion 321, the connecting portion 321 is located on one side of the wall portion 23 along the thickness direction Z, and a projection of the connecting portion 321 along the thickness direction Z is located within a projection of the wall portion 23 along the thickness direction Z. At least a part of the insulating component 40 is located between and attached to the wall portion 23 and the connecting portion 321.

The connecting portion 321 may be located on the side of the wall portion 23 facing the electrode assembly 10, or may be located on the side of the wall portion 23 facing away from the electrode assembly 10.

One or more connecting portions 321 may be provided. In some examples, one connecting portion 321 is provided and is annular; and in some other examples, a plurality of connecting portions 321 are provided and are arranged at intervals in the circumferential direction of the electrode lead-out hole 231.

In the thickness direction Z of the wall portion 23, the projection of the connecting portion 321 does not overlap with the projection of the electrode lead-out hole 231.

In the thickness direction Z of the wall portion 23, the insulating component 40 may be entirely located between the wall portion 23 and the connecting portion 321, or may be only partially located between the wall portion 23 and the connecting portion 321.

The wall portion 23 and the connecting portion 321 are arranged along the thickness direction Z. During assembly, the wall portion 23 and the connecting portion 321 can apply pressure to the insulating component 40 from both sides, thereby improving the bonding strength between the wall portion 23 and the insulating component 40 and the bonding strength between the connecting portion 321 and the insulating component 40, reducing the risk of separation of the wall portion 23 from the insulating component 40 and the risk of separation of the wall portion 23 from the electrode terminal 30, and improving the reliability of the battery cell 7.

In some embodiments, the connecting portion 321 protrudes from the hole wall of the electrode lead-out hole 231 in the radial direction of the electrode lead-out hole 231. The radial direction of the electrode lead-out hole 231 may be a direction passing through a central axis of the electrode lead-out hole 231 and perpendicular to the central axis of the electrode lead-out hole 231. Optionally, the central axis of the electrode lead-out hole 231 is parallel to the thickness direction Z of the wall portion 23.

The central axis of the electrode lead-out hole 231 is an imaginary line. As an example, the electrode lead-out hole 231 is rotationally symmetrical about the central axis.

In some examples, the electrode lead-out hole 231 may be a circular hole, and the radial direction of the electrode lead-out hole 231 may be the direction of the radius of the electrode lead-out hole 231; and in some other examples, the electrode lead-out hole 231 may be a square hole, and the radial direction of the electrode lead-out hole 231 may be the direction of the radius of a circumscribed circle of the electrode lead-out hole 231.

In some embodiments, the area S of the projection of the part of the insulating component 40 between the wall portion 23 and the connecting portion 321 along the thickness direction Z is greater than or equal to 50 mm².

The embodiment of the present application can make the connection area between the insulating component 40 and the wall portion 23 greater than or equal to 50 mm², and the connection area between the insulating component 40 and the connecting portion 321 greater than or equal to 50 mm², thereby improving the stability of the connection among the insulating component 40, the wall portion 23, and the connecting portion 321.

By way of example, the part of the insulating component 40 between the wall portion 23 and the connecting portion 321 is annular, the inner diameter r of the annular part may be the diameter of the electrode lead-out hole 231, and the outer diameter of the annular part may be the outer diameter R of the connecting portion 321. S=π×(R²-r²).

In some embodiments, S is 50 mm², 80 mm², 100 mm², 120 mm², 150 mm², 170 mm², 180 mm², or 200 mm².

In some embodiments, S is greater than or equal to 100 mm.

In some embodiments, the surface of the connecting portion 321 connected to the insulating component 40 is a plane.

In some embodiments, the connecting portion 321 is annular.

In some embodiments, the thickness of the part of the insulating component 40 located between the wall portion 23 and the connecting portion 321 ranges from 20 µm to 2000 µm.

The thickness of the part of the insulating component 40 located between the wall portion 23 and the connecting portion 321 is greater than or equal to 20 µm, so as to increase the creepage distance between the wall portion 23 and the connecting portion 321, reduce the risk of cracking of the insulating component 40 when the battery cell 7 is subjected to an external impact, improve the insulation effect between the wall portion 23 and the connecting portion 321, and reduce the risk of insulation failure. The thickness of the part of the insulating component 40 located between the wall portion 23 and the connecting portion 321 is less than or equal to 2000 µm, so as to reduce the space and weight occupied by the insulating component 40 and reduce the loss of energy density of the battery cell 7.

Optionally, the thickness of the part of the insulating component 40 located between the wall portion 23 and the connecting portion 321 is 20 µm, 30 µm, 50 µm, 100 µm, 150 µm, 200 µm, 300 µm, 400 µm, 500 µm, 600 µm, 700 µm, 800 µm, 900 µm, 1000 µm, 1200 µm, 1400 µm, 1500 µm, 1800 µm, or 2000 µm.

For example, the total thickness of the wall portion 23, the connecting portion 321, and the part of the insulating component 40 located between the wall portion 23 and the connecting portion 321 can be measured first, and then the thickness of the connecting portion 321 and the thickness of the wall portion 23 can be measured. The thickness of the insulating component 40 at a point can be calculated by calculation. In this way, the thickness of the insulating component 40 is measured at ten points, and then the average thickness is calculated. The average thickness may be the thickness of the part of the insulating component 40 located between the wall portion 23 and the connecting portion 321.

In some embodiments, the part of the insulating component 40 located between the wall portion 23 and the connecting portion 321 has a thickness ranging from 50 µm to 1000 µm.

In some embodiments, the part of the insulating component 40 located between the wall portion 23 and the connecting portion 321 has a thickness ranging from 100 µm to 500 µm.

In some embodiments, the insulating component 40 has a breakdown resistance voltage greater than or equal to 500 V.

In some embodiments, the wall portion 23 includes a first surface 232 and a second surface 233 arranged opposite to each other along the thickness direction Z of the wall portion 23, the first surface 232 facing the connecting portion 321 and the second surface 233 facing away from the connecting portion 321.

By way of example, the first surface 232 may be the inner surface of the wall portion 23 facing the electrode assembly 10, and the second surface 233 may be the outer surface of the wall portion 23 facing away from the electrode assembly 10; alternatively, the second surface 233 may be the inner surface of the wall portion 23 facing the electrode assembly 10, and the first surface 232 may be the outer surface of the wall portion 23 facing away from the electrode assembly 10.

In some embodiments, the insulating component 40 includes a first insulating portion 41 attached to the first surface 232, at least a part of the first insulating portion 41 being located between the first surface 232 and the connecting portion 321 and covering a region of the first surface 232 overlapping with the connecting portion 321 in the thickness direction Z.

In the thickness direction Z, the first insulating portion 41 may be entirely located between the first surface 232 and the connecting portion 321, or may only be partially located between the first surface 232 and the connecting portion 321.

By way of example, the first insulating portion 41 is attached to the wall portion 23 and the connecting portion 321 at the same time, so that the electrode terminal 30 can be installed on the shell 20 in an insulated state. Since the first insulating portion 41 is directly attached to the wall portion 23 and the connecting portion 321, it is less necessary in the embodiment of the present application to compress the first insulating portion 41. This means that while improving the sealing performance of the connection interface between the first insulating portion 41 and the wall portion 23 and the sealing performance of the connection interface between the first insulating portion 41 and the connecting portion 321, the pressure on the first insulating portion 41 can be reduced, thereby reducing the risk of damage to the first insulating portion 41.

In some embodiments, the first insulating portion 41 has a thickness ranging from 50 µm to 1000 µm.

In some embodiments, the first insulating portion 41 extends beyond the connecting portion 321 in the radial direction of the electrode lead-out hole 231, thereby increasing the creepage distance between the connecting portion 321 and the first surface 232 and improving the insulation effect.

Optionally, the thickness of the first insulating portion 41 is 50 µm, 100 µm, 150 µm, 250 µm, 350 µm, 500 µm, 600 µm, 700 µm, 800 µm, 900 µm, or 1000 µm.

In some embodiments, the first insulating portion 41 and the connecting portion 321 are both arranged around the electrode lead-out hole 231.

The contact surface between the first insulating portion 41 and the connecting portion 321 is annular, and the contact surface between the first insulating portion 41 and the wall portion 23 is annular. When the battery cell 7 is subjected to an external impact, the annular contact surfaces can effectively disperse stress, thereby reducing the risk of failure of the connection between the first insulating portion 41 and the connecting portion 321 and the failure of the connection between the first insulating portion 41 and the wall portion 23, and improving the reliability of the battery cell 7. The first insulating portion 41 surrounds the electrode lead-out hole 231, thereby sealing the electrode lead-out hole 231.

In some embodiments, the connecting portion 321 is located on the side of the wall portion 23 facing the electrode assembly 10.

During the normal operation process of the battery cell 7, the wall portion 23 can block the connecting portion 321 to reduce the risk that the electrode terminal 30 falls off from the electrode lead-out hole 231.

In some embodiments, the wall portion 23 and the connecting portion 321 are both annular.

In some embodiments, the battery cell 7 is a cylindrical battery cell.

In some embodiments, the ratio of the outer diameter D1 of the connecting portion 321 to the outer diameter D2 of the wall portion 23 ranges from 0.3 to 0.8.

The connection strength among the connecting portion 321, the wall portion 23, and the first insulating portion 41 is related to D1/D2. In the embodiment of the present application, D1/D2 is limited to be greater than or equal to 0.3 to increase the effective connection area between the connecting portion 321 and the first insulating portion 41 and the effective connection area between the wall portion 23 and the first insulating portion 41, improve the bonding strength between the electrode terminal 30 and the insulating component 40 and the bonding strength between the wall portion 23 and the insulating component 40, reduce the risk of connection failure, improve the reliability of the battery cell 7, and extend the service life of the battery cell 7.

The greater D1/D2 is, the more space and weight the connecting portion 321 occupies. In the embodiment of the present application, D1/D2 is limited to be less than or equal to 0.8 to reduce the loss of energy density and balance the energy density and reliability of the battery cell 7.

By way of example, D1/D2 is 0.3, 0.4, 0.5, 0.6, 0.7, or 0.8.

By way of example, the outer diameter D2 of the wall portion 23 is the diameter of the cylindrical shell.

In some embodiments, D1/D2 ranges from 0.5 to 0.7.

In some embodiments, the first surface 232 includes a first region 232a and a second region 232b, the first region 232a is covered by the first insulating portion 41, and the second region 232b surrounds the first region 232a. The battery cell 7 further includes an insulating separator 50, at least a part of which is located between the second region 232b and the tab 11 in the thickness direction Z.

The first insulating portion 41 can insulate and separate the first region 232a from the tab 11, and the insulating separator 50 can separate at least a part of the second region 232b from the tab 11, thereby reducing the risk of contact between the tab 11 and the wall portion 23 when the battery cell 7 is subjected to an impact and improving the reliability.

In some embodiments, the insulating separator 50 completely separates the second region 232b from the tab 11 in the thickness direction Z to further reduce the risk of short circuit and improve the reliability of the battery cell 7.

In some embodiments, the insulating separator 50 overlaps with the first insulating portion 41 in the thickness direction Z.

The embodiment of the present application can increase the creepage distance between the tab 11 and the wall portion 23, reduce the risk of contact between the tab 11 and the wall portion 23 when the battery cell 7 is subjected to an impact, and improve the reliability.

In some embodiments, the part of the insulating separator 50 overlapping with the first insulating portion 41 in the thickness direction Z is annular, and the annular width of the overlapping part is greater than or equal to 1 mm.

In some embodiments, the insulating separator 50 includes an insulating plate 51 and an insulating cylinder 52, the insulating cylinder 52 surrounds the tab 11, and the insulating plate 51 is connected to the end of the insulating cylinder 52 facing the first surface 232 and is located between the first surface 232 and the tab 11. The insulating plate 51 surrounds the outer side of the connecting portion 321.

The insulating plate 51 can separate the tab 11 from the second region 232b, and the insulating cylinder 52 can gather the tab 11 from the outer periphery to separate the wall of the shell 20 surrounding the tab 11 from the tab 11, thereby reducing the risk of short circuit. The insulating plate 51 and the connecting portion 321 may share at least a part of the space in the thickness direction Z, thereby improving space utilization.

In some embodiments, the electrode assembly 10 includes a main body portion 12, and the tab 11 is led out from the end portion of the main body portion 12 facing the wall portion 23. By way of example, the main body portion 12 includes a positive electrode coated region, a negative electrode coated region, and a separator.

In some embodiments, the insulating cylinder 52 further surrounds the end portion of the main body portion 12 close to the tab 11.

In some embodiments, the insulating cylinder 52 is connected to the main body portion 12.

In some embodiments, the insulating cylinder 52 is adhered to the main body portion 12. By way of example, the insulating separator 50 is an insulating tape.

In some embodiments, the insulating separator 50 is a heat shrinkable tube.

In some embodiments, the battery cell 7 further includes a current collecting member 60 located on the side of the tab 11 facing the first surface 232 and connected to the tab 11, and the electrode terminal 30 is located on the side of the current collecting member 60 facing away from the tab 11 and connected to the current collecting member 60.

The current collecting member 60 can provide adapter coupling, facilitating the electrical connection between the electrode terminal 30 and the tab 11.

In some embodiments, in the radial direction of the electrode lead-out hole 231, the current collecting member 60 extends beyond the connecting portion 321. The current collecting member 60 may be connected to the outer part of the tab 11 to reduce the difference in the conductive path between different parts of the tab 11 and the electrode terminal 30 and improve the consistency.

In some embodiments, at least a part of the insulating plate 51 is located between the current collecting member 60 and the first surface 232 and is attached to the current collecting member 60.

The insulating plate 51 can insulate and separate the current collecting member 60 from the wall portion 23 to reduce the risk of short circuit. The current collecting member 60 can fix the insulating plate 51, reduce shaking of the insulating separator 50 when the battery cell 7 is subjected to an impact, and reduce the risk of conduction between the current collecting member 60 and the wall portion 23.

In some embodiments, the insulating plate 51 covers the region of the current collecting member 60 that overlaps with the second region 232b in the thickness direction Z.

In some embodiments, the electrode terminal 30 abuts against the tab 11 through the current collecting member 60. Optionally, D1/D2 is greater than or equal to 0.5, and the electrode terminal 30 can support a larger area of the tab 11 through the current collecting component 60; during the process of the electrode assembly 10 being put into the shell, the electrode terminal 30 can effectively support the tab 11 through the current collecting component 60, thereby reducing the misalignment of the positive and negative electrode plates of the electrode assembly 10.

In some embodiments, the electrode terminal 30 includes a terminal body 31 and a first limiting portion 32 which are connected to each other, at least a part of the terminal body 31 is accommodated in the electrode lead-out hole 231, and the first limiting portion 32 protrudes from the outer peripheral surface 31a of the terminal body 31. The first limiting portion 32 includes a connecting portion 321.

The first limiting portion 32 can only include the connecting portion 321, or can also include other portions except the connecting portion 321.

One or more first limiting portions 32 can be provided. Optionally, one first limiting portion 32 is provided and is of an annular structure.

The terminal body 31 may be entirely located in the electrode lead-out hole 231 or only partially located in the electrode lead-out hole 231.

The terminal body 31 extends into the electrode lead-out hole 231, so that the electrode terminal 30 can be connected to other components. The wall portion 23 blocks the connecting portion 321, thereby preventing the electrode terminal 30 from falling off out of the shell 20.

By way of example, the terminal body 31 is of a columnar structure, and the first limiting portion 32 is an annular structure surrounding the outer side of the terminal body 31.

In some embodiments, the first limiting portion 32 includes a connecting portion 321 and a transitional portion 322, and the transitional portion 322 connects the terminal body 31 and the connecting portion 321. In the thickness direction Z of the wall portion 23, the projection of the transitional portion 322 is located within the projection of the electrode lead-out hole 231.

By way of example, in the thickness direction Z, the junction between the connecting portion 321 and the transitional portion 322 corresponds to the hole wall of the electrode lead-out hole 231. For example, as shown in FIG. 8, the junction between the connecting portion 321 and the transitional portion 322 is shown by a dotted line; the dotted line is intended only for ease of understanding and is not present in the electrode terminal.

In some embodiments, the thickness of the first insulating portion 41 is less than or equal to 1 mm, which can reduce the requirement on the size of the terminal body 31 and thus improve the energy density.

In some embodiments, the insulating component 40 further includes a second insulating portion 42, which is connected to the first insulating portion 41, surrounds the terminal body 31, and insulates and separates the outer peripheral surface 31a of the terminal body 31 from the hole wall of the electrode lead-out hole 231.

The second insulating portion 42 may be entirely located in the electrode lead-out hole 231 or only partially located in the electrode lead-out hole 231. By way of example, the end portion of the second insulating portion 42 along the axial direction of the electrode lead-out hole 231 may extend out of the electrode lead-out hole 231.

By way of example, the second insulating portion 42 is a cylindrical structure surrounding the outer side of the main body portion 12 of the terminal body 31.

The second insulating portion 42 can insulate and separate the terminal body 31 from the wall portion 23, thereby reducing the risk of conduction between the terminal body 31 and the shell 20 and improving the reliability.

In some embodiments, the second insulating portion 42 is attached to the outer peripheral surface 31a of the terminal body 31. The terminal body 31 can fix the second insulating portion 42 to reduce the risk of falloff of the second insulating portion 42. The second insulating portion 42 is attached to the terminal body 31, which can reduce the risk of foreign matter entering the interior of the shell 20 from between the second insulating portion 42 and the terminal body 31.

In some embodiments, the second insulating portion 42 is attached to the hole wall of the electrode lead-out hole 231. The hole wall of the electrode lead-out hole 231 can fix the second insulating portion 42 to reduce the risk of falloff of the second insulating portion 42. The second insulating portion 42 is attached to the hole wall of the electrode lead-out hole 231, which can reduce the risk of foreign matter entering the electrode lead-out hole 231 from between the second insulating portion 42 and the hole wall of the electrode lead-out hole 231.

In some embodiments, the first insulating portion 41 is connected to the second insulating portion 42, which reduces the gap between the first insulating portion 41 and the second insulating portion 42 to further improve the insulation performance and reduce the risk of conduction between the wall portion 23 and the electrode terminal 30.

In some embodiments, the electrode terminal 30 further includes a second limiting portion 33, and the second limiting portion 33 protrudes from the outer peripheral surface 31a of the terminal body 31 and is located on the side of the wall portion 23 facing away from the electrode assembly 10. In the thickness direction Z, at least a part of the wall portion 23 is located between the connecting portion 321 and the second limiting portion 33.

The wall portion 23 can be limited between the first limiting portion 32 and the second limiting portion 33 to limit the relative movement between the electrode terminal 30 and the wall portion 23. The second limiting portion 33 is provided to increase the connection strength between the electrode terminal 30 and the wall portion 23, thereby improving the stability.

In some embodiments, the insulating component 40 further includes a third insulating portion 43 connected to the second insulating portion 42, the third insulating portion 43 being attached to the second surface 233 and insulating and separating the second limiting portion 33 from the second surface 233 to reduce the risk of short circuit.

In some embodiments, the third insulating portion 43 may be entirely located between the second limiting portion 33 and the shell 20, or may be only partially located between the second limiting portion 33 and the shell 20.

In some embodiments, the third insulating portion 43 is attached to the second surface 233, which can improve the sealing performance of the connection surface between the third insulating portion 43 and the wall portion 23.

In some embodiments, the third insulating portion 43 is connected to the second insulating portion 42, which can reduce the gap between the third insulating portion 43 and the second insulating portion 42 to improve the insulation performance and reduce the risk of conduction between the wall portion 23 and the electrode terminal 30.

In some embodiments, in the radial direction of the electrode lead-out hole 231, the end portion of the first limiting portion 32 away from the terminal body 31 extends beyond the end portion of the second limiting portion 33 away from the terminal body 31.

In the radial direction of the electrode lead-out hole 231, the first limiting portion 32 has a greater size than the second limiting portion 33, so that the connection area between the connecting portion 321 and the first insulating portion 41 and the connection area between the wall portion 23 and the first insulating portion 41 can be increased, so as to improve the connection strength among the wall portion 23, the first insulating portion 41, and the connecting portion 321 and reduce the risk of connection failure.

In some embodiments, the connection strength between the second limiting portion 33 and the third insulating portion 43 is smaller than the connection strength between the first insulating portion 41 and the connecting portion 321.

By way of example, under the same condition, the force required to peel off the first insulating portion 41 from the connecting portion 321 is greater than the force required to peel off the third insulating portion 43 from the second limiting portion 33.

The connection strength between the first insulating portion 41 and the connecting portion 321 is relatively high, and the first insulating portion 41 can provide effective sealing and effective connection. The embodiment of the present application can reduce the requirement on the connection strength between the second limiting portion 33 and the third insulating portion 43, thereby simplifying the process.

The surface of the connecting portion 321 facing the first surface 232 is smoother than the surface of the second limiting portion 33 facing the second surface 233, thereby improving the connection strength between the first insulating portion 41 and the connecting portion 321.

In some embodiments, the second limiting portion 33 is formed in the electrode terminal 30 by a flanging process, so as to rivet the electrode terminal 30 to the wall portion 23.

In some embodiments, the first limiting portion 32, the second limiting portion 33, and the terminal body 31 are of an integrally-formed structure. The embodiment of the present application can improve the overall structural strength of the electrode terminal 30, reduce the internal resistance of the electrode terminal 30, and improve the current flow capacity.

In some embodiments, the melting point of the first insulating portion 41 is greater than or equal to 140°C. Melting point refers to the melting point at a normal pressure.

The first insulating portion 41 has a high melting point to reduce the risk of softening of the first insulating portion 41 during the production and use of the battery cell 7, thereby reducing the risk of failure in the connection between the first insulating portion 41 and the wall portion 23 and the risk of failure in the connection between the first insulating portion 41 and the connecting portion 321, and improving the reliability.

In some embodiments, the yield strength of the first insulating portion 41 is greater than or equal to 20 MPa, so as to reduce the risk of the first insulating portion 41 being crushed by force during the production and use of the battery cell 7 and improve the reliability.

In some embodiments, the melting point of the insulating component 40 is greater than or equal to 140°C.

In some embodiments, the yield strength of the insulating component 40 is greater than or equal to 20 MPa.

In some embodiments, a terminal recess 311 is provided on the outer side of the terminal body 31, and a bottom wall 311a of the terminal recess 311 is welded to the current collecting member 60.

In the embodiment of the present application, the terminal body 31 and the current collecting member 60 can be welded from the outside, which can reduce the risk of metal particles generated by welding being sputtered into the shell 20 and improve the reliability. In this embodiment, the thickness of the terminal body 31 is reduced by providing the terminal recess 311, so that the welding power required for welding the terminal body 31 and the current collecting member 60 can be reduced, the heat generation can be reduced, and the risk of the insulating component 40 being burnt can be reduced.

In some embodiments, the terminal recess 311 is formed in the terminal body 31.

In some embodiments, the bottom wall 311a of the terminal recess 311 is provided with a through hole 312. The through hole 312 is used for placing the terminal recess 311 and the inner space of the shell 20 in communication.

During the manufacturing process of the battery cell 7, the through hole 312 may be used in a plurality of manufacturing processes. For example, the through hole 312 may be used in a liquid injection process, a formation process, or other processes.

Specifically, the through hole 312 is used to inject electrolyte into the inner space of the shell 20. When liquid injection is required, the liquid injection head of the liquid injection device is pressed against the bottom wall 311a of the terminal recess 311, and then the liquid injection head injects the electrolyte into the shell 20 through the through hole 312. During the formation process of the battery cell 7, gas is generated in the shell body 21. The through hole 312 can also be used for communication with an external negative pressure device to extract the gas in the shell 20.

In some embodiments, the battery cell 7 further includes a sealing plate 70, and at least a part of the sealing plate 70 is accommodated in the terminal recess 311, connected to the terminal body 31, and covers and seals the through hole 312.

After the liquid injection process and other processes are completed, the sealing plate 70 is mounted on the electrode terminal 30 to seal the through hole 312 to reduce the risk of electrolyte leakage.

In some embodiments, the sealing plate 70 is welded to the terminal body 31.

In some embodiments, the battery cell 7 further includes a sealing rivet 80, which is inserted into the through hole 312.

In some embodiments, the terminal recess 311 has a stepped surface, and at least a part of the sealing plate 70 is accommodated in the terminal recess 311 and supported by the stepped surface.

In some embodiments, the battery cell 7 is a cylindrical battery cell. In some other embodiments, the battery cell 7 is a square battery cell.

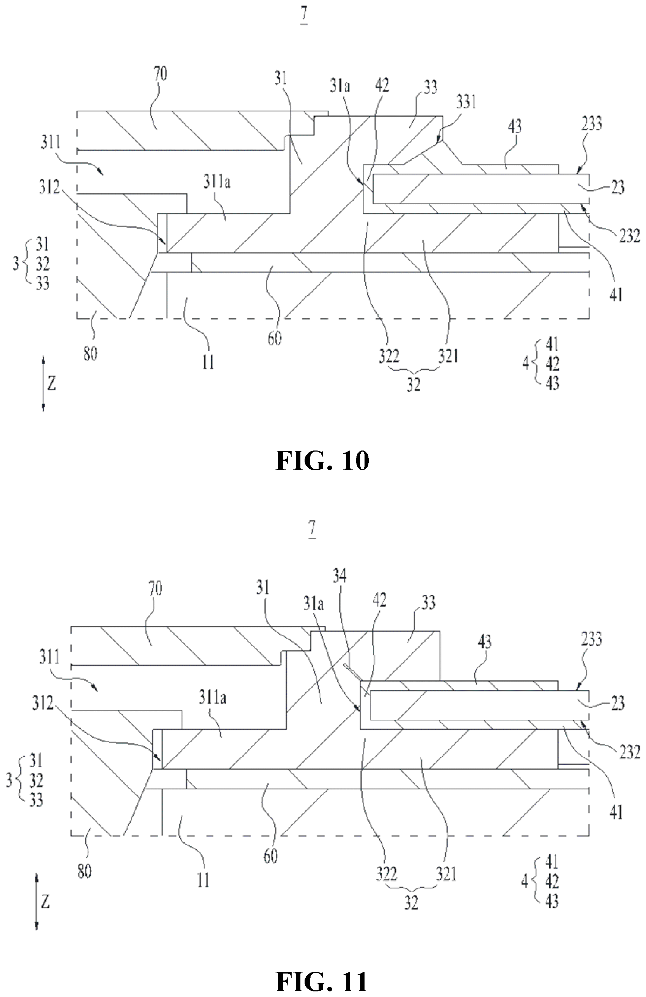

FIG. 10 is a partial schematic sectional view of a battery cell provided by some embodiments of the present application.

As shown in FIG. 10, in some embodiments, the second limiting portion 33 has an inclined surface 331 facing the second surface 233. Along the radial direction of the electrode lead-out hole 231, the spacing between the inclined surface 331 and the second surface 233 in the thickness direction Z gradually increases. At least a part of the third insulating portion 43 is located between and attached to the inclined surface 331 and the second surface 233.

By way of example, the inclined surface 331 may be formed by providing a chamfer or a rounded corner on the second limiting portion 33.

By providing the inclined surface 331, the space between the second limiting portion 33 and the second surface 233 can be increased; during the assembly process, when the insulating component 40 is squeezed by the second limiting portion 33, the material can flow between the second surface 233 and the inclined surface 331, thereby reducing the material overflow.

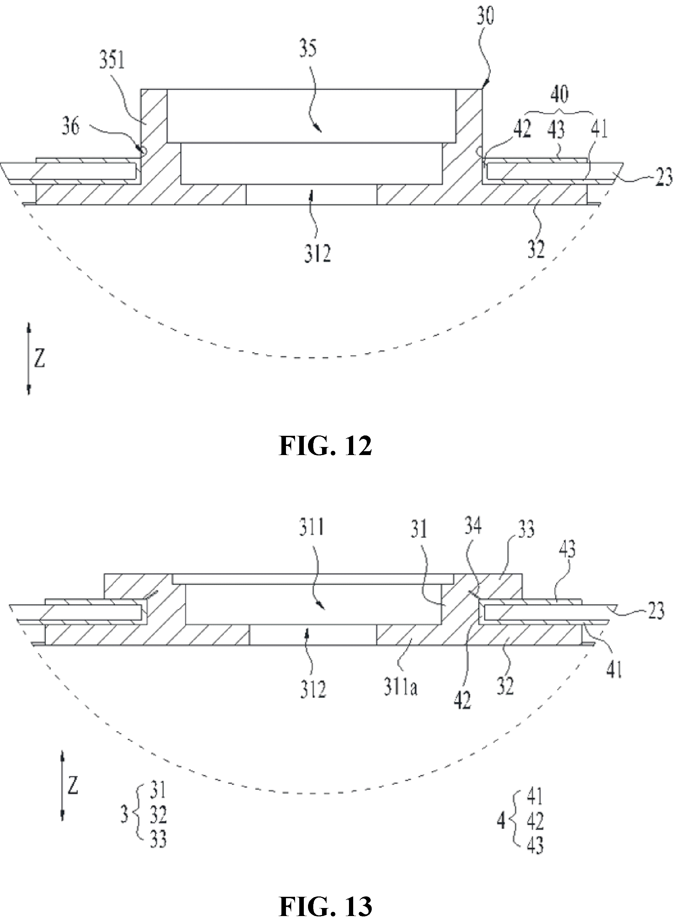

FIG. 11 is a partial schematic sectional view of a battery cell provided by some embodiments of the present application; FIG. 12 is a schematic view of a battery cell in an assembly process provided by some embodiments of the present application; and FIG. 13 is another schematic view of a battery cell in an assembly process provided by some embodiments of the present application.

As shown in FIG. 11, in some embodiments, the electrode terminal 30 is provided with a gap 34, which is recessed from the outer peripheral surface 31a of the terminal body 31 and comes close to the connection between the terminal body 31 and the second limiting portion 33.

The gap 34 can disperse stress and reduce stress concentration during the process of folding and forming of the second limiting portion 33.

As shown in FIGS. 12 and 13, in some embodiments, the second limiting portion 33 is formed on the electrode terminal 30 by providing a first recess 35 on the side facing away from the electrode assembly 10 and folding the side wall 351 of the first recess outward. A second recess 36 is provided on the outer side of the side wall of the first recess 351. The second recess 36 is used for guiding the side wall 351 of the first recess to bend and is configured to be filled after the second limiting portion 33 is formed to form the gap 34.

By providing the first recess 35, a side wall 211 with a smaller thickness is formed on the electrode terminal 30. The electrode terminal 30 is installed on the wall portion 23 by folding the side wall 351 of the first recess. The second recess 36 can not only guide the side wall 351 of the first recess to fold, but also provide space for the flow of material, thereby reducing the accumulation of the material at the folding point, improving the shape of the electrode terminal 30, and reducing the difficulty of forming the electrode terminal 30.

In some embodiments, the section of the second recess 36 is semicircular, triangular, trapezoidal, rectangular, or of other shapes.

As shown in FIG. 13, after the second limiting portion 33 is folded and formed, the remaining part of the first recess 35 forms the terminal recess 311.

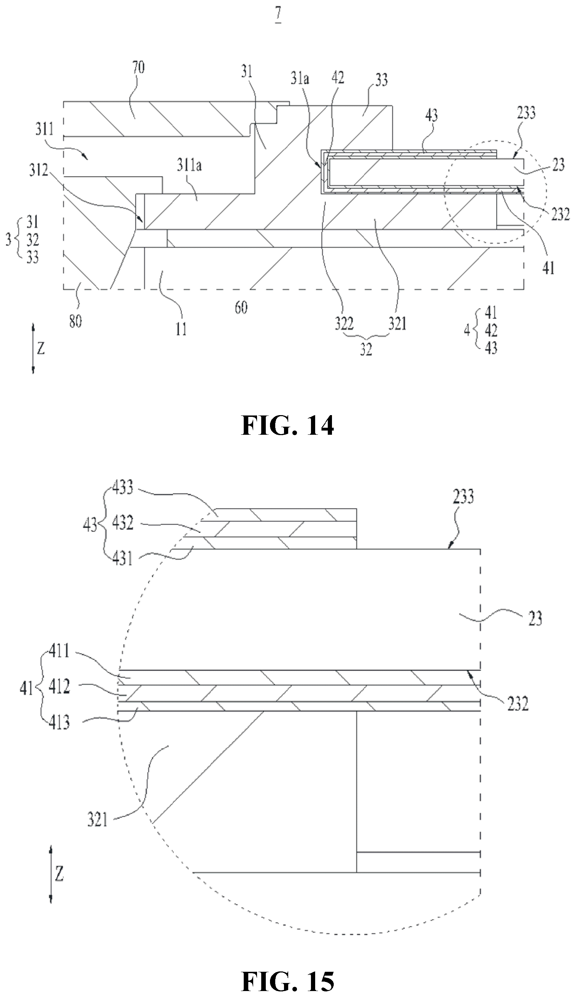

FIG. 14 is a partial schematic sectional view of a battery cell provided by some embodiments of the present application; and FIG. 15 is an enlarged schematic view at a circle in FIG. 14.

As shown in FIGS. 14 and 15, in some embodiments, the first insulating portion 41 includes a first insulating layer 411, a second insulating layer 412, and a third insulating layer 413 stacked together, the first insulating layer 411 is adhered to the first surface 232, the second insulating layer 412 is located between the first insulating layer 411 and the third insulating layer 413, and at least a part of the third insulating layer 413 is adhered to the connecting portion 321.

The first insulating portion 41 adopts a multi-layer composite structure, which can improve the comprehensive performance of the first insulating portion 41.

In some embodiments, the melting point of the second insulating layer 412 is greater than that of the first insulating layer 411, and the melting point of the second insulating layer 412 is greater than that of the third insulating layer 413.

The melting point of the first insulating layer 411 may be greater than, equal to, or less than that of the third insulating layer 413.

The second insulating layer 412 has a high melting point and is not easily softened during the production and use of the battery cell 7, thereby insulating and separating the wall portion 23 from the connecting portion 321 and reducing the risk of short circuit.

By way of example, even if the first insulating layer 411 and the third insulating layer 413 are melted, the second insulating layer 412 can provide the insulation and isolation effect, thereby reducing the risk of short circuit.

In some embodiments, the difference between the melting point of the second insulating layer 412 and that of the first insulating layer 411 is greater than or equal to 20°C, so as to reduce the risk of softening or melting of the second insulating layer 412 during the production and use of the battery cell 7.

In some embodiments, the difference between the melting point of the second insulating layer 412 and that of the third insulating layer 413 is greater than or equal to 20°C, so as to reduce the risk of softening or melting of the second insulating layer 412 during the production and use of the battery cell 7.

In some embodiments, the melting point of the first insulating layer 411 is greater than or equal to 140°, and the melting point of the third insulating layer 413 is greater than or equal to 140°.

In some embodiments, the first insulating portion 41 includes a polymer and a modified polymer, and the modified polymer is formed by modifying the polymer. Both the first insulating layer 411 and the third insulating layer 413 include the modified polymer, and the second insulating layer 412 includes the polymer.

By providing the modified polymer, the bonding strength between the first insulating layer 411 and the wall portion 23 and the bonding strength between the third insulating layer 413 and the connecting portion 321 can be improved, thereby reducing the risk of failure in the connection between the first insulating layer 411 and the wall portion 23 and the risk of failure in the connection between the third insulating layer 413 and the connecting portion 321.

In some embodiments, the second insulating layer 412 does not include the modified polymer, which can reduce the impact of modification on the properties of the polymer and retain the original properties of the polymer, such as strength, melting point or others. For example, the melting point of the polymer is higher than that of the modified polymer.

In some embodiments, the polymer comprises polypropylene or polyethylene terephthalate.

In some embodiments, the polymer can be modified by grafting polar functional groups to form the modified polymer.

By way of example, maleic anhydride can be grafted onto the polymer to form the modified polymer.

In some embodiments, the grafting rate of maleic anhydride in the first insulating layer 411 is greater than 0.1%, and the grafting rate of maleic anhydride in the third insulating layer 413 is greater than 0.1%.

In some embodiments, the first insulating layer 411 may be a modified high bonding strength adhesive, and the third insulating layer 413 may be a modified high bonding strength adhesive.

In some embodiments, a plate made of a polymer can be provided first, and then grafting can be performed on both sides of the plate to form the first insulating layer 411, the second insulating layer 412, and the third insulating layer 413.

In some other alternative embodiments, the first insulating portion 41 is a single-layer structure which is modified as a whole. In other words, the second insulating layer 412 also includes the modified polymer, and the first insulating layer 411, the second insulating layer 412, and the third insulating layer 413 have the same structure.

In some embodiments, the second insulating portion 42 and the third insulating portion 43 also both have a three-layer structure.

By way of example, in some embodiments, the third insulating portion 43 includes a fourth insulating layer 431, a fifth insulating layer 432, and a sixth insulating layer 433 that are stacked together, the fourth insulating layer 431 is adhered to the second surface 233, the fifth insulating layer 432 is located between the fourth insulating layer 431 and the sixth insulating layer 433, and at least a part of the sixth insulating layer 433 is adhered to the second limiting portion 33.

In some embodiments, the fourth insulating layer 431 includes a polymer and a modified polymer, the sixth insulating layer 433 includes a polymer and a modified polymer, and the fifth insulating layer 432 includes a polymer and does not include a modified polymer.

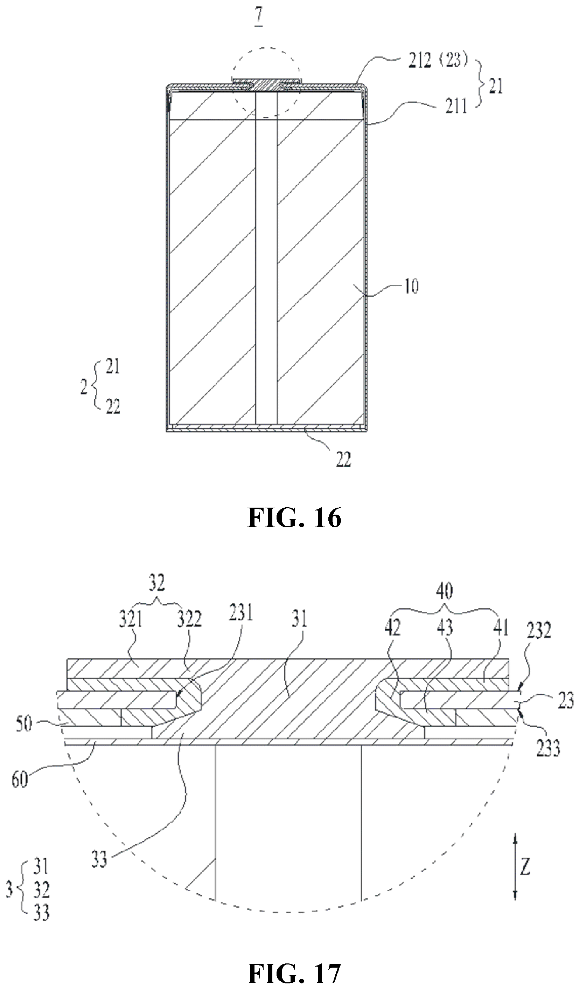

FIG. 16 is a schematic sectional view of a battery cell provided by some other embodiments of the present application; and FIG. 17 is an enlarged schematic view at a circle in FIG. 16.

As shown in FIGS. 16 and 17, in some embodiments, the connecting portion 321 is located on the outer side of the wall portion 23. The first surface 232 is the outer surface of the wall portion 23, and the second surface 233 is the inner surface of the wall portion 23.

In some embodiments, the electrode terminal 30 includes a first limiting portion 32, a second limiting portion 33, and a terminal body 31, at least a part of the terminal body 31 is accommodated in the electrode lead-out hole 231, and both the first limiting portion 32 and the second limiting portion 33 protrude from the outer peripheral surface 31a of the terminal body 31.

The first limiting portion 32 is located on the side of the wall portion 23 away from the electrode assembly 10 and includes a connecting portion 321. The second limiting portion 33 is located on the side of the wall portion 23 facing the electrode assembly 10. In the thickness direction Z, a part of the wall portion 23 is located between the second limiting portion 33 and the connecting portion 321.

In some embodiments, the insulating component 40 includes a first insulating portion 41, a second insulating portion 42, and a third insulating portion 43. The first insulating portion 41 is attached to the first surface 232, at least a part of the first insulating portion 41 being located between the first surface 232 and the connecting portion 321 and covering a region of the first surface 232 overlapping with the connecting portion 321 in the thickness direction Z. The second insulating portion 42 is connected to the first insulating portion 41, surrounds the terminal body 31, and insulates and separates the outer peripheral surface 31a of the terminal body 31 from the hole wall of the electrode lead-out hole 231. The third insulating portion 43 is attached to the second surface 233 and insulates and separates the second limiting portion 33 from the second surface 233.

In some embodiments, during assembly, the electrode terminal 30 is extended into the electrode lead-out hole 231 from the outer side, and the electrode terminal 30 is squeezed from the inner side of the wall portion 23 to form the second limiting portion 33 and rivet the electrode terminal 30 to the wall portion 23.

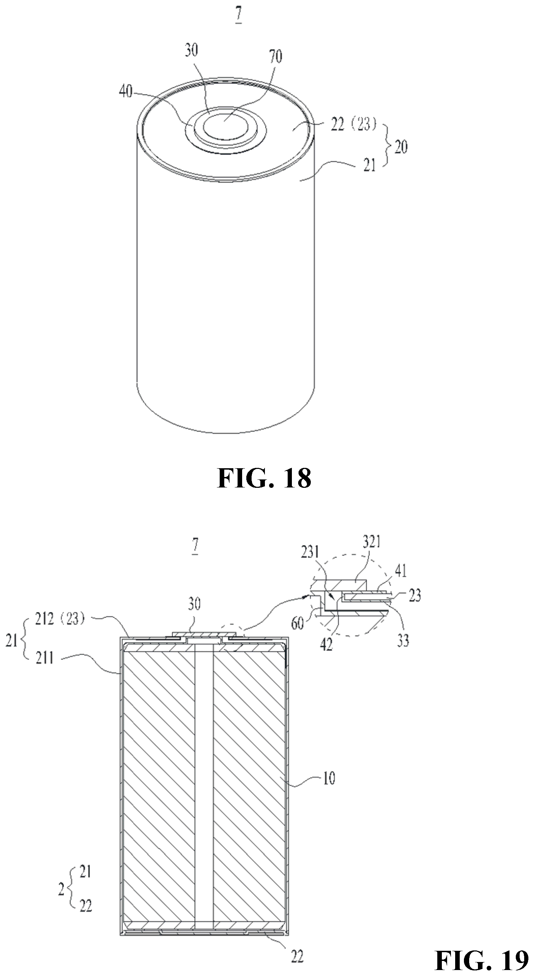

FIG. 18 is a schematic structural view of a battery cell provided by some other embodiments of the present application.

As shown in FIG. 18, in some embodiments, the shell 20 includes a shell body 21 and an end cover 22. The end cover 22 includes a wall portion 23. Correspondingly, the electrode terminal 30 and the insulating component 40 are arranged on the end cover 22.

The end cover 22, the electrode terminal 30, and the insulating component 40 can be pre-assembled into an end cover assembly and then assembled with the shell body 21, the electrode assembly 10, and other components to form the battery cell 7.

FIG. 19 is a schematic sectional view of a battery cell provided by some other embodiments of the present application.

As shown in FIG. 19, in some embodiments, the electrode terminal 30 is fixed to the wall portion 23 via the insulating component 40.

In some embodiments, the electrode terminal 30 may be in a flat plate shape and is directly fixed to the wall portion 23 through the insulating component 40 without a riveting structure, thereby simplifying the structure of the electrode terminal 30 and the installation process of the electrode terminal 30.

In some embodiments, the electrode terminal 30 may be located either on the inner side of the wall portion 23 or on the outer side of the wall portion 23.

According to some embodiments of the present application, the present application further provides a battery comprising a plurality of battery cells of any one of the above embodiments.

According to some embodiments of the present application, the present application further provides an electrical apparatus comprising the battery cell of any one of the above embodiments. The battery cell is used for providing electric energy for the electrical apparatus. The electrical apparatus can be any one of the above devices or systems in which a battery cell is used.

With reference to FIGS. 4 to 9, an embodiment of the present application provides a cylindrical battery cell 7, which includes an electrode assembly 10, a shell 20, an electrode terminal 30, and an insulating component 40.

The shell 20 includes a shell body 21 and an end cover 22. The shell body 21 has an opening, and the end cover 22 covers the opening. The shell body 21 includes a wall portion 23 opposite to the end cover 22, and the wall portion 23 is provided with an electrode lead-out hole 231.

The electrode assembly 10 is accommodated in the shell 20. The electrode assembly 10 includes a main body portion 12 and a tab 11. The tab 11 is located on the side of the main body portion 12 facing the wall portion 23.

The electrode terminal 30 includes a terminal body 31, a first limiting portion 32, and a second limiting portion 33. The terminal body 31 passes through the electrode lead-out hole 231. The first limiting portion 32 protrudes from the outer peripheral surface 31a of the terminal body 31 and is located on the side of the wall portion 23 facing the electrode assembly 10. The second limiting portion 33 protrudes from the outer peripheral surface 31a of the terminal body 31 and is located on the side of the wall portion 23 facing away from the electrode assembly 10. In the thickness direction Z, at least a part of the wall portion 23 is located between the connecting portion 321 and the second limiting portion 33.

The first limiting portion 32 includes a connecting portion 321. A projection of the connecting portion 321 along the thickness direction Z is located within a projection of the wall portion 23 along the thickness direction Z.

The wall portion 23 includes a first surface 232 and a second surface 233 which are arranged opposite to each other along the thickness direction Z, the first surface 232 facing the connecting portion 321 and the second surface 233 facing away from the connecting portion 321.

The insulating component 40 connects the electrode terminal 30 and the shell 20 and is used for insulating and separating the electrode terminal 30 from the wall portion 23. The insulating component 40 is bonded to the wall portion 23 and the electrode terminal 30 through a hot-press process.

The insulating component 40 includes a first insulating portion 41, a second insulating portion 42, and a third insulating portion 43, the first insulating portion 41 is attached to the first surface 232, the third insulating portion 43 is attached to the second surface 233, and the second insulating portion 42 connects the first insulating portion 41 and the second insulating portion 42.

At least a part of the first insulating portion 41 is located between the first surface 232 and the connecting portion 321 and covers a region of the first surface 232 overlapping with the connecting portion 321 in the thickness direction Z. The second insulating portion 42 is connected to the first insulating portion 41, surrounds the terminal body 31, and insulates and separates the outer peripheral surface 31a of the terminal body 31 from the hole wall of the electrode lead-out hole 231. The third insulating portion 43 insulates and separates the second limiting portion 33 from the second surface 233.

Although the present application has been described with reference to the preferred embodiments, without departing from the scope of the present application, various improvements may be made to the present application and parts therein may be replaced with equivalents, in particular, the various technical features mentioned in various embodiments may be combined in any way, as long as there is no structural conflict. The present application is not limited to the specific embodiments disclosed herein, but includes all technical solutions falling within the scope of the claims.

## Claims

1. A battery cell, comprising:
a shell;
an electrode terminal arranged on the shell;
an electrode assembly accommodated in the shell and comprising a tab connected to the electrode terminal; and
an insulating component connecting the electrode terminal and the shell and used for insulating and separating the electrode terminal from the shell.

2. The battery cell according to claim 1, wherein at least a part of the insulating component is located between and attached to the electrode terminal and the shell.

3. The battery cell according to claim 1 or 2, wherein the insulating component is adhered to the shell and the electrode terminal.

4. The battery cell according to claim 3, wherein the insulating component is adhered to the shell and the electrode terminal through a hot-press bonding process.

5. The battery cell according to claim 3 or 4, wherein a passivation film is provided on a surface of the electrode terminal, and the passivation film is connected to the insulating component; and/or
a passivation film is provided on a surface of the shell, and the passivation film is connected to the insulating component.

6. The battery cell according to any one of claims 1 to 5, wherein the shell comprises a wall portion, the wall portion is provided with an electrode lead-out hole, and the electrode terminal is arranged on the wall portion and covers at least a part of the electrode lead-out hole in a thickness direction of the wall portion; and
the insulating component connects the electrode terminal and the wall portion and insulates and separates the electrode terminal from the wall portion.

7. The battery cell according to claim 6, wherein the insulating component is used for sealing the electrode lead-out hole.

8. The battery cell according to claim 6 or 7, wherein the electrode terminal comprises a connecting portion, the connecting portion is located on one side of the wall portion along the thickness direction, and a projection of the connecting portion along the thickness direction is located within a projection of the wall portion along the thickness direction; and
at least a part of the insulating component is located between and attached to the wall portion and the connecting portion.

9. The battery cell according to claim 8, wherein the area of a projection of the part of the insulating component located between the wall portion and the connecting portion along the thickness direction is greater than or equal to 50 mm², and optionally, the area of the projection of the part of the insulating component located between the wall portion and the connecting portion along the thickness direction is greater than or equal to 100 mm².

10. The battery cell according to claim 8 or 9, wherein the thickness of the part of the insulating component located between the wall portion and the connecting portion ranges from 20 µm to 2000 µm, and optionally, the thickness of the part of the insulating component located between the wall portion and the connecting portion ranges from 50 µm to 1000 µm.

11. The battery cell according to any one of claims 8 to 10, wherein the wall portion comprises a first surface and a second surface which are arranged opposite to each other along the thickness direction of the wall portion, the first surface facing the connecting portion and the second surface facing away from the connecting portion; and
the insulating component comprises a first insulating portion attached to the first surface, at least a part of the first insulating portion being located between the first surface and the connecting portion and covering a region of the first surface overlapping with the connecting portion in the thickness direction.

12. The battery cell according to claim 11, wherein in the radial direction of the electrode lead-out hole, the first insulating portion extends beyond the connecting portion.

13. The battery cell according to claim 11 or 12, wherein the first insulating portion and the connecting portion are both arranged around the electrode lead-out hole.

14. The battery cell according to any one of claims 11 to 13, wherein the connecting portion is located on the side of the wall portion facing the electrode assembly.

15. The battery cell according to claim 14, wherein the wall portion and the connecting portion are both annular; and
the ratio of the outer diameter of the connecting portion to the outer diameter of the wall portion ranges from 0.3 to 0.8, and optionally, the ratio of the outer diameter of the connecting portion to the outer diameter of the wall portion ranges from 0.5 to 0.7.

16. The battery cell according to claim 14 or 15, wherein the first surface comprises a first region and a second region, the first region is covered by the first insulating portion, and the second region surrounds the first region; and
the battery cell further comprises an insulating separator, at least a part of which is located between the second region and the tab in the thickness direction.

17. The battery cell according to claim 16, wherein the insulating separator completely separates the second region from the tab in the thickness direction.

18. The battery cell according to claim 16 or 17, wherein the insulating separator overlaps with the first insulating portion in the thickness direction.

19. The battery cell according to any one of claims 16 to 18, wherein the insulating separator comprises an insulating plate and an insulating cylinder, the insulating cylinder surrounds the tab, and the insulating plate is connected to the end of the insulating cylinder facing the first surface and is located between the first surface and the tab; and
the insulating plate surrounds an outer side of the connecting portion.

20. The battery cell according to claim 19, further comprising a current collecting member located on the side of the tab facing the first surface and connected to the tab, the electrode terminal being located on the side of the current collecting member facing away from the tab and connected to the current collecting member;
wherein at least a part of the insulating plate is located between the current collecting member and the first surface and is attached to the current collecting member.

21. The battery cell according to any one of claims 14 to 20, wherein the electrode terminal comprises a terminal body and a first limiting portion which are connected to each other, at least a part of the terminal body is accommodated in the electrode lead-out hole, and the first limiting portion protrudes from an outer peripheral surface of the terminal body; and
the first limiting portion comprises the connecting portion.

22. The battery cell according to claim 21, wherein the insulating component further comprises a second insulating portion, which is connected to the first insulating portion, surrounds the terminal body, and insulates and separates the outer peripheral surface of the terminal body from a hole wall of the electrode lead-out hole.

23. The battery cell according to claim 22, wherein the second insulating portion is attached to the outer peripheral surface of the terminal body and the hole wall of the electrode lead-out hole.

24. The battery cell according to claim 22 or 23, wherein the electrode terminal further comprises a second limiting portion, and the second limiting portion protrudes from the outer peripheral surface of the terminal body and is located on the side of the wall portion facing away from the electrode assembly; and
at least a part of the wall portion is located between the connecting portion and the second limiting portion in the thickness direction.

25. The battery cell according to claim 24, wherein the insulating component further comprises a third insulating portion connected to the second insulating portion, the third insulating portion being attached to the second surface and insulating and separating the second limiting portion from the second surface.

26. The battery cell according to claim 25, wherein the second limiting portion has an inclined surface facing the second surface;
along the radial direction of the electrode lead-out hole, the spacing between the inclined surface and the second surface in the thickness direction gradually increases; and
at least a part of the third insulating portion is located between and attached to the inclined surface and the second surface.

27. The battery cell according to any one of claims 24 to 26, wherein the electrode terminal is provided with a gap, which extends from the outer peripheral surface of the terminal body and comes close to the connection between the terminal body and the second limiting portion.

28. The battery cell according to claim 27, wherein the second limiting portion is formed on the electrode terminal by providing a first recess on the side facing away from the electrode assembly and folding a side wall of the first recess outward; and
a second recess is provided on an outer side of the side wall of the first recess, the second recess is used for guiding the side wall of the first recess to bend, and is configured to be filled after the second limiting portion is formed to form a gap.

29. The battery cell according to any one of claims 11 to 28, wherein the melting point of the first insulating portion is greater than or equal to 140°C.

30. The battery cell according to any one of claims 11 to 29, wherein the yield strength of the first insulating portion is greater than or equal to 20 MPa.

31. The battery cell according to any one of claims 11 to 30, wherein the first insulating portion comprises a first insulating layer, a second insulating layer, and a third insulating layer stacked together, the first insulating layer is adhered to the first surface, the second insulating layer is located between the first insulating layer and the third insulating layer, and at least a part of the third insulating layer is adhered to the connecting portion.

32. The battery cell according to claim 31, wherein the melting point of the second insulating layer is greater than that of the first insulating layer, and the melting point of the second insulating layer is greater than that of the third insulating layer.

33. The battery cell according to claim 32, wherein the difference between the melting point of the second insulating layer and the melting point of the first insulating layer is greater than or equal to 20°C; and/or
the difference between the melting point of the second insulating layer and the melting point of the third insulating layer is greater than or equal to 20°C.

34. The battery cell according to claims 31 to 33, wherein the first insulating portion includes a polymer and a modified polymer, and the modified polymer is formed by modifying the polymer; and
both the first insulating layer and the third insulating layer include the modified polymer, and the second insulating layer includes the polymer.

35. The battery cell according to claim 34, wherein the second insulating layer does not include the modified polymer.

36. The battery cell according to claim 34 or 35, wherein the polymer comprises polypropylene or polyethylene terephthalate.

37. The battery cell according to any one of claims 6 to 36, wherein the shell comprises a shell body and an end cover, the shell body has an opening, and the end cover covers the opening; and
the shell body comprises the wall portion arranged opposite to the end cover.

38. A battery , comprising a plurality of battery cells according to any one of claims 1 to 37.

39. An electrical apparatus, comprising the battery according to claim 38, the battery being used for providing electric energy.
